(19) **Europäisches Patentamt / European Patent Office / Office européen des brevets**

(11) **EP 2 736 672 B2**

(12) # NOUVEAU FASCICULE DE BREVET EUROPEEN
Après la procédure d'opposition

(45) Date de publication et mention de la décision concernant l'opposition:
**16.10.2024 Bulletin 2024/42**

(45) Mention de la délivrance du brevet:
**30.09.2015 Bulletin 2015/40**

(21) Numéro de dépôt: **12756555.4**

(22) Date de dépôt: **23.07.2012**

(51) Classification Internationale des Brevets (IPC):
**B23K 35/02** (2006.01)    **B23K 35/30** (2006.01)
**B23K 35/38** (2006.01)    **C22C 38/04** (2006.01)
**C22C 38/18** (2006.01)    **B62D 29/00** (2006.01)
**C21D 1/673** (2006.01)    **C21D 9/48** (2006.01)
**C21D 9/50** (2006.01)    **B32B 15/01** (2006.01)
**B23K 26/32** (2014.01)    **B23K 101/34** (2006.01)
**B23K 103/08** (2006.01)    **B23K 103/00** (2006.01)
**B23K 26/60** (2014.01)    **C23C 28/02** (2006.01)

(52) Classification Coopérative des Brevets (CPC):
**B23K 35/3053; B23K 26/32; B23K 26/60;
B23K 35/0261; B23K 35/3073; B23K 35/383;
B32B 15/012; C21D 1/673; C21D 9/48; C21D 9/50;
C21D 9/505; C22C 38/04; C22C 38/18;
C23C 28/021; C23C 28/023;**    (Cont.)

(86) Numéro de dépôt international:
**PCT/IB2012/001418**

(87) Numéro de publication internationale:
**WO 2013/014512 (31.01.2013 Gazette 2013/05)**

(54) **PIÈCE D'ACIER SOUDÉE MISE EN FORME À CHAUD À TRÈS HAUTE RÉSISTANCE MÉCANIQUE ET PROCÉDÉ DE FABRICATION**

WARMGEFORMTER ANTEIL MIT HOCHE FESTIGKEIT UND VERFAHREN ZUR HERSTELLUNG DIESEN ANTEIL

HOT-FORMED WELDED PART HAVING HIGH RESISTANCE AND PROCESS TO PRODUCE SUCH A PART

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.07.2011 PCT/IB2011/001725**

(43) Date de publication de la demande:
**04.06.2014 Bulletin 2014/23**

(73) Titulaire: **ArcelorMittal**
**1160 Luxembourg (LU)**

(72) Inventeurs:
- **CRETTEUR, Laurent**
  **F-60270 Gouvieux (FR)**
- **YIN, Qingdong**
  **F-60761 Montataire (FR)**
- **SCHMIT, Francis**
  **F-60600 Clermont (FR)**
- **EHLING, Wolfram**
  **B-9000 Gent (BE)**

(74) Mandataire: **Lavoix**
**2, place d'Estienne d'Orves**
**75441 Paris Cedex 09 (FR)**

(56) Documents cités:
| | |
|---|---|
| EP-A1- 1 878 531 | WO-A1-02/34456 |
| WO-A1-2007/118939 | WO-A1-2010/068804 |
| WO-A1-2011/138278 | WO-A2-2005/107996 |
| DE-A1- 102008 027 167 | DE-U1- 202007 018 832 |
| JP-A- H0 741 842 | US-B1- 6 290 905 |

- **SAFDUAL ZN SICHERHEITSDATENBLATT, December 1999 (1999-12-01)**
- **WIKIPEDIA-EINTRAG, 25 March 2011 (2011-03-25)**
- **MAAS J ET AL: "Tailored blanks in hot stamping", THYSSENKRUPP TECHFORUM - ENGLISH EDITION, THYSSENKRUPP, DUSSELDORF, DE, no. 1, 1 January 2008 (2008-01-01), pages 28 - 31, XP001519906, ISSN: 1612-2771**

(52) Classification Coopérative des Brevets (CPC):
(Cont.)
B23K 2101/34; B23K 2103/08; B23K 2103/50;
C21D 2211/001; C21D 2211/008; C21D 2221/01;
C21D 2221/02; C21D 2251/02

**Description**

L'invention concerne principalement une pièce d'acier soudée mise en forme à chaud à très haute résistance mécanique.

L'invention concerne également un procédé de fabrication d'une telle pièce d'acier soudée ainsi que l'utilisation de cette pièce d'acier soudée pour la fabrication de pièces de structures ou de sécurité pour véhicule automobile.

Il est connu de fabriquer des pièces d'acier soudées à partir de flans d'aciers de composition et/ou d'épaisseur différentes soudés entre eux bout à bout en continu. Selon un premier mode de fabrication connu, ces flans soudés sont déformés à froid. Selon un second mode de fabrication connu, ces flans soudés sont chauffés à une température permettant l'austénitisation de l'acier puis déformés à chaud et refroidis rapidement au sein de l'outillage de mise en forme. La présente invention se rapporte à ce second mode de fabrication.

La composition de l'acier peut être choisie à la fois pour permettre des opérations subséquentes de chauffage et de déformation, et pour conférer à la pièce d'acier soudée une résistance mécanique élevée, une grande résistance aux chocs ainsi qu'une bonne tenue à la corrosion.

De telles pièces d'acier trouvent notamment application dans l'industrie automobile, et plus particulièrement pour la fabrication des pièces anti-intrusion, des pièces de structure ou des pièces participant à la sécurité des véhicules automobiles.

Parmi les matériaux déformables à chaud présentant les caractéristiques requises pour les applications mentionnées précédemment, la tôle d'acier revêtue faisant l'objet de la publication EP971044 contient notamment une teneur en poids en carbone comprise entre 0,10 % et 0,5% et comporte un pré-revêtement métallique à base d'aluminium. La tôle est revêtue, par exemple au trempé en continu, dans un bain comportant, outre de l'aluminium, du silicium et du fer dans des teneurs contrôlées. Le traitement thermique subséquent appliqué lors d'un procédé de formage à chaud ou après la mise en forme et le refroidissement opéré postérieurement à ce traitement thermique permet d'obtenir une microstructure martensitique conférant à la pièce d'acier une résistance mécanique élevée pouvant dépasser 1500 MPa.

Un procédé de fabrication connu de pièces d'acier soudées consiste à approvisionner au moins deux tôles d'acier selon la publication EP971044, à souder en bout à bout ces deux tôles pour obtenir un flan soudé, éventuellement à réaliser une découpe de ce flan soudé, puis à chauffer le flan soudé avant de réaliser une déformation à chaud, par exemple par emboutissage à chaud, pour conférer à la pièce d'acier la forme requise pour son application.

Une technique de soudage connue est le soudage par faisceau Laser. Cette technique présente des avantages en termes de souplesse, de qualité et de productivité comparés à d'autres techniques de soudage telles que le soudage à la molette ou le soudage à l'arc.

Mais au cours de l'opération de soudage, le pré-revêtement à base d'aluminium constitué d'une couche d'alliage intermétallique en contact avec le substrat en acier, surmonté d'une couche d'alliage métallique, est dilué avec le substrat d'acier au sein de la zone fondue qui est la zone portée à l'état liquide pendant l'opération de soudage et qui se solidifie après cette opération de soudage en formant la liaison entre les deux tôles.

Dans la gamme de teneurs en aluminium du pré revêtement, deux situations peuvent alors se présenter.

Selon un premier phénomène, si la concentration en aluminium dans la zone fondue est localement élevée, des composés intermétalliques se forment, résultant de la dilution d'une partie du pré-revêtement au sein de la zone fondue, et de l'alliation qui se produit lors du chauffage ultérieur du joint soudé avant l'étape de déformation à chaud. Ces composés intermétalliques sont des sites privilégiés d'amorçage de la rupture.

Selon un second phénomène, si la concentration en aluminium dans la zone fondue est moins élevée, l'aluminium, élément alphagène en solution solide dans la matrice, empêche la transformation en austénite qui intervient lors de l'étape de chauffage précédant l'emboutissage. Dès lors, il n'est plus possible d'obtenir de la martensite ou de la bainite lors du refroidissement après la mise en forme à chaud, et le joint soudé comporte de la ferrite. La zone fondue présente alors une dureté et une résistance mécaniques moindres que les deux tôles adjacentes.

Pour éviter le premier phénomène décrit ci-dessus, une solution est décrite dans la publication EP2007545, qui consiste à éliminer, au niveau de la périphérie des tôles destinées à subir l'opération de soudage, la couche d'alliage métallique superficielle en laissant la couche d'alliage intermétallique. L'enlèvement peut être réalisé par brossage ou par faisceau laser. La couche d'alliage intermétallique est maintenue pour garantir la tenue à la corrosion et éviter les phénomènes de décarburation et d'oxydation lors du traitement thermique qui précède l'opération de mise en forme.

Cependant, cette technique ne permet pas toujours d'éviter le second phénomène décrit ci-dessus : bien que la dilution de la mince couche d'alliage intermétallique ne conduise qu'à une très faible augmentation de la teneur en aluminium dans la zone fondue (inférieure à 0,1%), la conjugaison des ségrégations locales en aluminium et de la combinaison éventuelle du bore sous forme de nitrure dans la zone fondue, conduit à une diminution de la trempabilité dans cette zone. De ce fait, la vitesse critique de trempe est augmentée dans la zone fondue au regard de celle des deux tôles adjacentes.

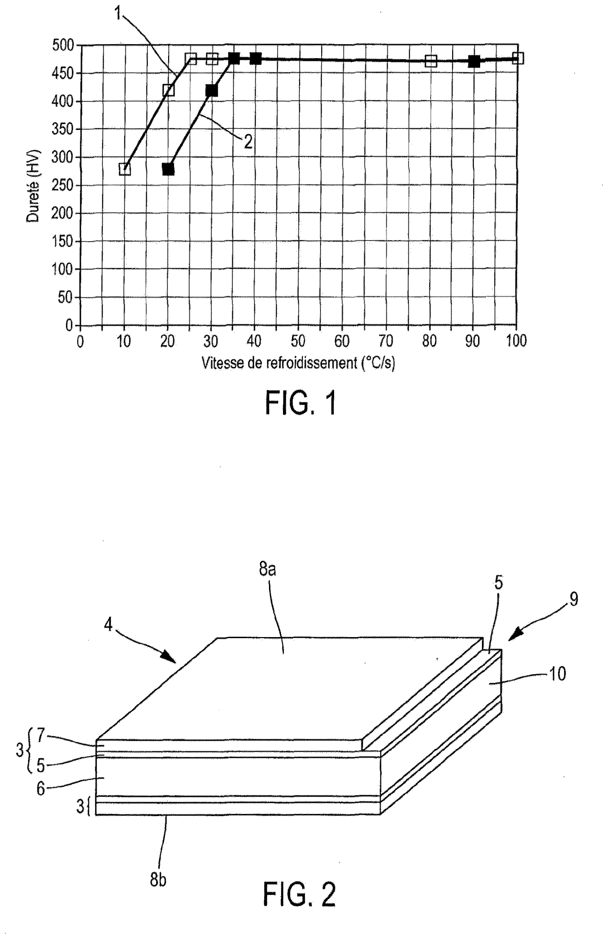

La figure 1 représente la dureté observée dans la zone fondue (profil 2) et dans le métal de base (profil 1), c'est à dire la tôle d'acier avoisinante, après chauffage à 900°C puis emboutissage à chaud et refroidissement à vitesse variable. La dureté du métal de base est celle obtenue dans le cas d'une tôle selon la publication EP971044, comportant notamment 0,22%C, 1,12%Mn, 0,003%B. La dureté de la zone fondue est celle observée lorsque le soudage est réalisé comme décrit dans la publication EP2007545.

Le profil 1 indique que la vitesse critique de trempe martensitique du métal de base est de 27°C/seconde puisque toute vitesse de refroidissement supérieure à 27°C/seconde conduit à une dureté de la tôle de l'ordre de 480 HV et à une microstructure totalement martensitique.

En revanche, le profil 2 montre que la vitesse de trempe critique martensitique de la zone fondue est de 35°C/s. Ainsi, une vitesse de refroidissement après emboutissage à chaud comprise entre 27°C/s et 35°C/s ne conférera pas une dureté suffisante et une structure pleinement martensitique dans cette zone.

Par ailleurs, à cette augmentation de la vitesse de trempe critique dans la zone fondue, viennent s'ajouter des conditions défavorables de refroidissement de cette zone fondue lors de la mise en forme à chaud.

En effet, la zone fondue peut se trouver en absence totale de contact avec l'outil froid lors du refroidissement pour les raisons indépendantes ou combinées suivantes :

- si les deux tôles présentent une épaisseur différente, en raison de la « marche » aménagée dans l'outil pour permettre le déplacement de la matière lors de la mise en forme
- en raison d'un éventuel défaut d'alignement entre l'outil et le flan soudé.

Ainsi, il résulte de ce qui a été dit précédemment que pour une vitesse de refroidissement du flan soudé inférieure à 35°C/s, la zone fondue présente une hétérogénéité microstructurale et une diminution des caractéristiques mécaniques de l'assemblage pouvant rendre la pièce d'acier soudée non conforme aux applications requises, notamment pour le domaine automobile.

Un autre procédé de soudage connu appliqué aux tôles de la publication EP971044 est décrit dans la publication EP1878531.

Ce procédé consiste à réaliser une zone fondue présentant les caractéristiques de résistance mécanique requises par le soudage de deux tôles préalablement découpées par cisaillage et présentant, du fait de ce type de découpe, des dépôts du pré-revêtement à base d'aluminium sur leurs tranches.

Le procédé de soudage consiste soit en un soudage hybride laser-TIG, c'est-à-dire un faisceau laser combiné à un arc électrique délivré par une torche de soudage TIG (« Tungsten Inert Gas ») équipée d'une électrode non fusible, soit en un soudage hybride laser-MIG (« Metal Inert Gas ») pour lequel la torche de soudage est équipée d'une électrode filaire fusible.

Mais les pièces d'acier soudées embouties à chaud après l'opération de soudage selon ce procédé présentent également une fragilité mécanique au niveau de la zone fondue.

En effet, quel que soit le taux de métal d'apport dans le cas d'un soudage hybride laser-MIG, le mélange au sein de la zone fondue n'est pas suffisant pour éviter la formation de zones à forte teneur en aluminium, qui conduisent à une absence de formation de martensite au niveau de la zone fondue lors du refroidissement et donc une résistance mécanique insuffisante.

Pour obtenir un niveau de dilution souhaité, il est nécessaire d'avoir des apports en métal importants qui engendrent d'une part des difficultés pour fondre le métal apporté par le soudage avec le métal à souder, et d'autre part une surépaisseur importante au niveau de la zone fondue qui est gênante pour la mise en forme et rend la pièce à souder résultante non conforme aux normes qualité en vigueur dans le secteur automobile.

Dans ce contexte, la présente invention vise une pièce d'acier soudée à très haute résistance mécanique, c'est-à-dire supérieure à 1230 MPa, obtenue à partir d'un chauffage dans le domaine austénitique suivi de la déformation d'au moins un flan soudé obtenu par soudage en bout à bout d'au moins deux tôles constituées au moins en partie d'un substrat en acier et d'un pré-revêtement qui est constitué d'une couche d'alliage intermétallique en contact avec le substrat en acier, surmontée d'une couche en alliage métallique laquelle est en alliage d'aluminium ou à base d'aluminium.

L'invention vise particulièrement une telle pièce d'acier soudée pour laquelle la déformation préalable consiste en une mise en forme à chaud et pour laquelle la résistance mécanique de la zone fondue est supérieure à celle des deux tôles soudées ou d'au moins l'une des deux tôles soudées.

A cet effet, la pièce d'acier soudée, à très hautes caractéristiques de résistance mécanique de l'invention est obtenue à partir d'un chauffage dans le domaine austénitique suivi d'une mise en forme à chaud puis d'un refroidissement d'au moins un flan soudé obtenu par soudage en bout à bout d'au moins une première et une seconde tôles constituées au moins en partie d'un substrat en acier et d'un pré-revêtement qui est constitué d'une couche d'alliage intermétallique en contact avec le substrat en acier, surmontée d'une couche en alliage métallique en alliage d'aluminium ou à base d'aluminium, et est essentiellement caractérisée en ce que les abords à proximité directe de la zone fondue résultant de l'opération de soudage et constituant la liaison entre la première et la seconde tôles, sont dépourvus de la couche d'alliage métallique tout en étant pourvus de la couche d'alliage intermétallique, et en ce que, sur au moins une partie de la longueur de la zone fondue, le rapport entre la teneur en carbone de la zone fondue et la teneur en carbone du substrat de l'une des première ou seconde tôle présentant la teneur en carbone Cmax la plus élevée est compris entre 1,27 et 1,59.

La composition du substrat d'au moins la première ou la seconde tôle comprend, les teneurs étant exprimées en poids :

$0,10\% \leq C \leq 0,5\%$
$0,5\% \leq Mn \leq 3\%$
$0,1\% \leq Si \leq 1\%$
$0,01\% \leq Cr \leq 1\%$
$Ti \leq 0,2\%$
$Al \leq 0,1\%$
$S \leq 0,05\%$
$P \leq 0,1\%$
$0,0002\% \leq B \leq 0,010\%$

le solde étant du fer et des impuretés inhérentes à l'élaboration.

Les caractéristiques précitées de la pièce d'acier soudée de l'invention se traduisent par une rupture intervenant dans le métal de base et non dans la zone fondue, lorsque le joint soudé est sollicité par une traction uniaxiale perpendiculaire au joint.

La pièce d'acier soudée de l'invention peut également comporter les caractéristiques optionnelles suivantes considérées isolément ou selon toutes les combinaisons techniques possibles :

- le rapport entre la dureté de la zone fondue et la dureté du substrat de l'une des première ou seconde tôle présentant la teneur en carbone Cmax la plus élevée, est supérieur à 1,029 + (0,36 Cmax), Cmax étant exprimé en pourcentage pondéral.

- la composition du substrat d'au moins la première ou la seconde tôle comprend, les teneurs étant exprimées en poids :

$0,15\% \leq C \leq 0,4\%$
$0,8\% \leq Mn \leq 2,3\%$
$0,1\% \leq Si \leq 0,35\%$
$0,01\% \leq Cr \leq 1\%$
$Ti \leq 0,1\%$
$Al \leq 0,1\%$
$S \leq 0,03\%$
$P \leq 0,05\%$
$0,0005\% \leq B \leq 0,010\%$

le solde étant du fer et des impuretés inhérentes à l'élaboration.

- la composition du substrat d'au moins la première ou la seconde tôle comprend, les teneurs étant exprimées en poids :

$0,15\% \leq C \leq 0,25\%$
$0,8\% \leq Mn \leq 1,8\%$
$0,1\% \leq Si \leq 0,35\%$
$0,01\% \leq Cr \leq 0,5\%$
$Ti \leq 0,1\%$
$Al \leq 0,1\%$
$S \leq 0,05\%$
$P \leq 0,1\%$
$0,0002\% \leq B \leq 0,005\%$

le solde étant du fer et des impuretés inhérentes à l'élaboration.

- la teneur en carbone de la zone fondue est inférieure ou égale à 0,35% en poids.

- la couche d'alliage métallique du pré-revêtement comprend, les teneurs étant exprimées en poids, entre 8 et 11% de silicium, entre 2 et 4 % en fer, le reste de la composition étant de l'aluminium et des impuretés inévitables.

- la microstructure de la zone fondue est dépourvue de ferrite.

- la microstructure de la zone fondue est martensitique.

- ladite mise en forme à chaud du flan soudé est réalisée par une opération d'emboutissage à chaud.

- les tranches respectives des bords périphériques des première et seconde tôles destinées à subir l'opération de soudage sont dépourvues d'aluminium ou d'alliage d'aluminium dont la présence peut résulter d'une opération préalable de découpe de chacune des première et seconde tôles.

L'invention porte également sur un procédé de fabrication de la pièce d'acier soudée telle que précédemment décrite.

A cet effet, selon le procédé de l'invention, on approvisionne au moins une première et une seconde tôles d'acier constituées d'un substrat en acier et d'un pré-revêtement qui est constitué d'une couche d'alliage intermétallique en contact avec le substrat en acier, surmontée d'une couche d'alliage métallique laquelle est en alliage d'aluminium ou à base d'aluminium, et pour lesquelles au moins une face d'une partie d'un bord périphérique de chacune des première et seconde tôles d'acier destinée à subir l'opération de soudage est dépourvue de la dite couche d'alliage métallique en laissant en place la couche d'alliage intermétallique, et pour lesquelles les tranches respectives des bords périphériques des première et seconde tôles destinés à subir l'opération de soudage sont dépourvues d'aluminium ou d'alliage d'aluminium dont la présence peut résulter d'une opération préalable de découpe de chacune des première et seconde tôles, puis on soude sous protection gazeuse en bout à bout la première et la seconde tôle d'acier au niveau des bords périphériques respectifs de ces première et seconde tôles d'acier dépourvus de la couche d'alliage métallique au moyen d'une source laser et en utilisant un fil d'apport de matière sur au moins une partie de la longueur de la zone soudée, on obtient un flan soudé dans lequel la teneur en carbone de la zone fondue résultant de l'opération de soudage et constituant la liaison entre les première et seconde tôles est comprise entre 1,27 et 1,59 fois la teneur en carbone du substrat de la tôle présentant la teneur en carbone la plus élevée, puis on chauffe ledit flan soudé de manière à conférer dans la zone fondue, une structure totalement austénitique, puis on met en forme à chaud ledit flan soudé et chauffé pour obtenir une pièce d'acier, puis on refroidit ladite pièce d'acier à vitesse contrôlée pour obtenir les caractéristiques de résistance mécanique visées.

La composition du substrat d'au moins la première ou la seconde tôle comprend, les teneurs étant exprimées en poids :

$0,10\% \leq C \leq 0,5\%$
$0,5\% \leq Mn \leq 3\%$
$0,1\% \leq Si \leq 1\%$
$0,01\% \leq Cr \leq 1\%$
$Ti \leq 0,2\%$
$Al \leq 0,1\%$
$S \leq 0,05\%$
$P \leq 0,1\%$
$0,0002\% \leq B \leq 0,010\%$

le solde étant du fer et des impuretés inhérentes à l'élaboration.

Le fil d'apport comprend, les teneurs étant exprimées en poids :

$0,6\% \leq C \leq 1,5\%$
$1\% \leq Mn \leq 4\%$
$0,1\% \leq Si \leq 0,6\%$
$Cr \leq 2\%$
$Ti \leq 0,2\%$

le solde étant du fer et des impuretés inhérentes à l'élaboration.

Le procédé de fabrication de la pièce d'acier soudée de l'invention peut également comporter les caractéristiques optionnelles suivantes considérées isolément ou selon toutes les combinaisons techniques possibles :

- les faces opposées des bords périphériques respectifs de chacune des première et seconde tôles d'acier sont dépourvues de couche d'alliage métallique en laissant en place la couche d'alliage intermétallique.

- la largeur de la zone dépourvue de couche d'alliage métallique au niveau du bord périphérique des première et seconde tôles destiné à subir l'opération de soudage est comprise entre 0,2 et 2,2 millimètres.

- la composition du substrat d'au moins la première ou la seconde tôle comprend, les teneurs étant exprimées en poids :

$0,15\% \leq C \leq 0,4\%$
$0,8\% \leq Mn \leq 2,3\%$
$0,1\% \leq Si \leq 0,35\%$
$0,01\% \leq Cr \leq 1\%$
$Ti \leq 0,1\%$
$Al \leq 0,1\%$
$S \leq 0,03\%$
$P \leq 0,05\%$
$0,0005\% \leq B \leq 0,010\%$

le solde étant du fer et des impuretés inhérentes à l'élaboration.

- la composition du substrat d'au moins la première ou la seconde tôle comprend, les teneurs étant exprimées en poids :

$0,15\% \leq C \leq 0,25\%$
$0,8\% \leq Mn \leq 1,8\%$
$0,1\% \leq Si \leq 0,35\%$
$0,01\% \leq Cr \leq 0,5\%$
$Ti \leq 0,1\%$
$Al \leq 0,1\%$
$S \leq 0,05\%$
$P \leq 0,1\%$
$0,0002\% \leq B \leq 0,005\%$

le solde étant du fer et des impuretés inhérentes à l'élaboration.

La protection gazeuse est réalisée par l'utilisation d'hélium et/ou d'argon. - lors de l'étape de soudage, les bords périphériques à souder des première et seconde tôles d'acier sont disposés à une distance maximum l'un de l'autre de 0,1 millimètres.

- l'énergie linéaire de soudage de ladite source laser lors de l'opération de soudage est supérieure à 0,3 kJ/cm.

- la source laser est soit de type Laser Gaz CO2 conférant une énergie linéaire de soudage supérieure à 1,4 kJ/cm, soit de type Laser état solide conférant une énergie linéaire de soudage supérieure à 0,3kJ/cm.

- la vitesse de soudage est comprise entre 3 mètres/minutes et 8 mètres/minutes, et la puissance du Laser Gaz CO2 est supérieure ou égale à 7 kW et la puissance du Laser état solide est supérieure ou égale à 4kW.

- l'étape de soudage est réalisée sous protection gazeuse d'Hélium et/ou d'Argon.

- le débit d'Hélium et/ou d'Argon pendant l'étape de soudage est supérieur ou égal à 15 litres par minute.

- le fil d'apport comprend, les teneurs étant exprimées en poids :

$0,65\% \leq C \leq 0,75\ \%$
$1,95\% \leq Mn \leq 2,05\%$
$0,35\% \leq Si \leq 0,45\%$
$0,95\% \leq Cr \leq 1,05\%$
$0,15\% \leq Ti \leq 0,25\ \%$

le solde étant du fer et des impuretés inhérentes à l'élaboration.

- la proportion de métal d'apport relativement au volume de la zone fondue est comprise entre 12% et 26% et la vitesse de soudage est comprise entre 3 et 7 mètres par minute.

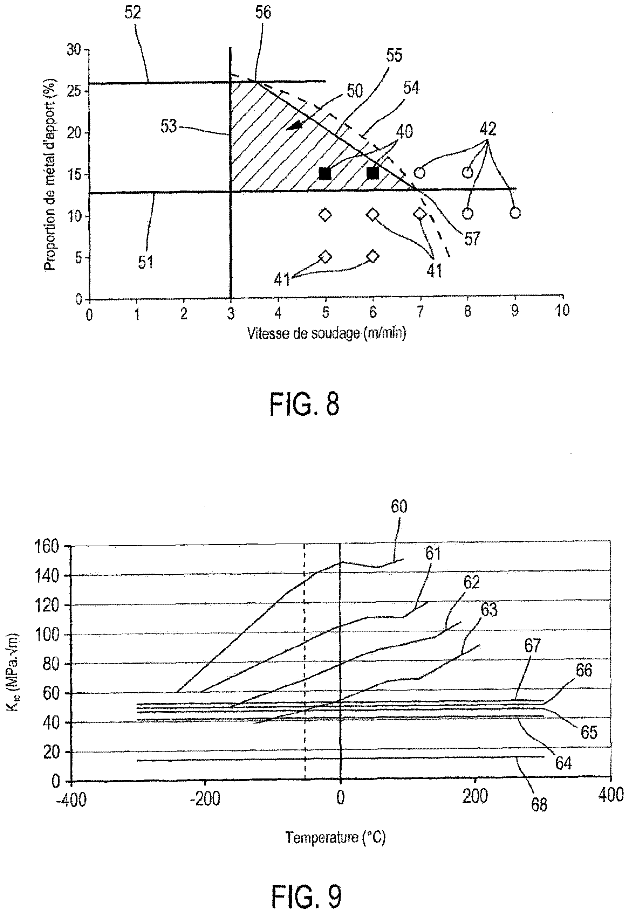

- le couple constitué par ladite proportion de métal d'apport relativement au volume de la zone fondue et la vitesse de soudage se situe au sein du domaine illustré à la figure 8.

- le couple constitué par ladite proportion de métal d'apport relativement au volume de la zone fondue et la vitesse de soudage répond aux exigences combinées suivantes :

    - la proportion de métal d'apport relativement au volume de la zone fondue est comprise entre 12 % et 26%, et
    - la vitesse de soudage est comprise entre 3 et 7 mètres par minute, et
    - lorsque la vitesse de soudage est supérieure à 3,5 mètres par minute, le couple constitué par la proportion de métal d'apport relativement au volume de la zone fondue (35) et la vitesse de soudage est tel que Y≤-3,86X+39,5, étant entendu que Y désigne la proportion de métal d'apport exprimée en pourcentage volumique, et que X désigne la vitesse de soudage exprimée en mètre par minute.
    - la proportion du métal d'apport relativement au volume de la zone fondue (35) est comprise entre 14 et 16%, le débit d'Hélium et/ou d'Argon est compris entre 13 et 17 litres par minute, le diamètre au point d'impact sur la tôle du faisceau laser (30) est compris entre 500 et 700 micromètres, et l'extrémité (32a) du fil d'apport (32) est situé à une distance du point d'impact du faisceau Laser sur la tôle comprise entre 2 et 3 millimètres.
    - la vitesse de refroidissement de la zone fondue (35) pendant l'étape de mise en forme à chaud est supérieure ou égale à la vitesse critique de trempe martensitique de la dite zone fondue (35).

Enfin, l'invention porte sur l'utilisation de la pièce d'acier précédemment décrite pour la fabrication de pièces de structures ou de sécurité pour véhicule notamment automobile.

D'autres caractéristiques et avantages de l'invention ressortiront clairement de la description qui en est donnée ci-dessous, à titre indicatif et nullement limitatif, en référence aux figures annexées parmi lesquelles :

- la figure 1 déjà présentée représente le profil comparé de la dureté du métal de base et de la zone fondue en fonction de la vitesse de refroidissement lors de l'emboutissage à chaud, pour une pièce d'acier soudée de l'art antérieur,
- la figure 2 est une représentation schématique d'une tôle utilisée pour mettre en oeuvre le procédé de l'invention,
- la figure 3 est une représentation schématique du début de l'opération de soudage du procédé de l'invention,
- la figure 4 est une représentation schématique de la fin de l'opération de soudage du procédé de l'invention,
- la figure 5 représente le profil de la résistance mécanique à la rupture en traction de la zone fondue, la sollicitation étant exercée perpendiculairement par rapport au joint soudé, en fonction du pourcentage du métal d'apport dans la zone fondue lors du procédé de l'invention, et pour deux vitesses différentes de refroidissement au cours de l'emboutissage à chaud,
- la figure 6 représente la localisation de la rupture, soit dans le métal de base, soit dans la zone fondue en fonction du rapport entre la teneur en carbone de la zone fondue et la teneur en carbone du métal de base,
- la figure 7 est un graphique représentant un exemple de profil de microdureté (dureté sous une charge de 200g) d'une pièce d'acier soudée à partir de deux tôles d'épaisseur différente et emboutie selon l'invention et de la zone avoisinante à la dite zone fondue, et
- la figure 8 est un graphique illustrant les conditions limites de fonctionnement optimum du procédé de l'invention en termes de pourcentage de métal d'apport et de vitesse de soudage.
- la figure 9 présente la variation de la ténacité dans la zone fondue en fonction de la température, pour différentes teneurs en carbone.

Selon le procédé de l'invention, on approvisionne deux tôles revêtues par immersion dans un bain d'aluminium fondu selon un procédé dit « au trempé » en continu conformément à la publication EP971044. Le terme de tôle est entendu dans un sens large comme toute bande ou objet obtenu par découpe à partir d'une bande, d'une bobine ou d'une feuille.

Le bain d'aluminium faisant l'objet de l'opération d'immersion peut comporter en outre de 9 à 10% de silicium et de 2 à 3,5% de fer.

L'acier constituant le substrat en acier des tôles présente la composition suivante, les teneurs étant exprimées en poids :

0,10% ≤ C ≤ 0,5%
0,5% ≤ Mn ≤ 3%
0,1% ≤ Si ≤ 1%
0,01% ≤ Cr ≤ 1%

Ti ≤ 0,2%
Al ≤ 0,1%
S ≤ 0,05%
P ≤ 0,1%
0,0002% ≤ B ≤ 0,010%

le solde étant du fer et des impuretés inhérentes à l'élaboration.

Préférentiellement, la composition de l'acier sera la suivante :

0,15% ≤ C ≤ 0,4%
0,8% ≤ Mn ≤ 2,3%
0,1% ≤ Si ≤ 0,35%
0,01% ≤ Cr ≤ 1%
Ti ≤ 0,1%
Al ≤ 0,1%
S ≤ 0,03%
P ≤ 0,05%
0,0005% ≤ B ≤ 0,010%

le solde étant du fer et des impuretés inhérentes à l'élaboration.

Plus préférentiellement, et en accord avec la description qui suit, la composition de l'acier sera la suivante :

0,15% ≤ C ≤ 0,25%
0,8% ≤ Mn ≤ 1,8%
0,1% ≤ Si ≤ 0,35%
0,01% ≤ Cr ≤ 0,5%
Ti ≤ 0,1%
Al ≤ 0,1%
S ≤ 0,05%
P ≤ 0,1%
0,0002% ≤ B ≤ 0,005%

le solde étant du fer et des impuretés inhérentes à l'élaboration.

La composition des tôles destinées à être soudées entre elles peut être identique ou différente.

Le revêtement, qui sera dénommé « pré-revêtement» à ce stade dans la description qui suit, présente les caractéristiques suivantes résultant de l'immersion de la tôle dans le bain d'aluminium : en référence à la figure 2, le pré-revêtement 3 de la tôle 4 présente deux couches 5,7 de nature différente.

En premier lieu, une couche d'alliage intermétallique 5 de type AlSiFe est en contact sur la surface du substrat en acier 6 de la tôle 4. Cette couche d'alliage intermétallique 5 résulte de la réaction entre le substrat en acier 6 et le bain d'aluminium.

Par ailleurs, cette couche d'alliage intermétallique 5 est surmontée d'une couche d'alliage métallique 7 qui forme une couche superficielle du pré-revêtement 3.

Le pré-revêtement 3 est présent sur les deux faces opposées 8a, 8b de la tôle 4.

Selon le procédé de l'invention, la couche d'alliage métallique 7 est retirée au niveau de la périphérie 9 de la tôle 4 qui est destinée à subir l'opération subséquente de soudage.

Sur la figure 2, seule la face supérieure 8a fait l'objet de ce retrait, mais avantageusement, la couche d'alliage métallique 7 sera retirée périphériquement au niveau des deux faces opposées 8a, 8b de la tôle 4.

La couche d'alliage intermétallique 5 subsiste ainsi au niveau de la périphérie 9 de la tôle 4 destinée à faire l'objet de l'opération de soudage.

L'ablation de la couche métallique 7 peut être réalisée par une opération de brossage puisque la couche métallique 7 retirée présente une dureté inférieure à la dureté de la couche d'alliage intermétallique 5 qui subsiste.

L'homme du métier saura adapter les paramètres concernant le brossage pour permettra l'enlèvement de la couche métallique 7 à la périphérie 9 de la tôle 4.

Il est également possible d'effectuer le retrait de la couche d'alliage métallique par un faisceau laser dirigé vers la périphérie 9 de la tôle 4.

L'interaction entre le faisceau laser et le pré-revêtement3 provoque une vaporisation et une expulsion de la couche d'alliage métallique 7.

La largeur de l'enlèvement de la couche d'alliage métallique 7 au niveau de la périphérie 9 de la tôle 4 est comprise entre 0,2 et 2,2 millimètres.

Par ailleurs, l'épaisseur de la couche d'alliage intermétallique 5 subsistant au niveau de la périphérie 9 de la tôle 4 présente une épaisseur de l'ordre de 5 micromètres.

Ces deux modes d'ablation (brossage et laser) de la couche d'alliage métallique font l'objet de la publication EP2007545.

Les opérations de découpe préalable de la tôle 4, ainsi que l'opération d'enlèvement de la couche d'alliage métallique 7 telle que précédemment décrite, peuvent conduire à entraîner une partie du pré-revêtement 3 au niveau de la tranche 10 de la périphérie 9 de la tôle 4 destinée à faire l'objet de l'opération de soudage. Il en résulte alors des traces d'aluminium ou d'alliage d'aluminium au niveau de cette tranche 10.

Selon le procédé de l'invention, ces traces d'aluminium ou d'alliage d'aluminium au niveau de la tranche 10 de la tôle 4 sont également retirées par brossage préalablement à l'opération de soudage.

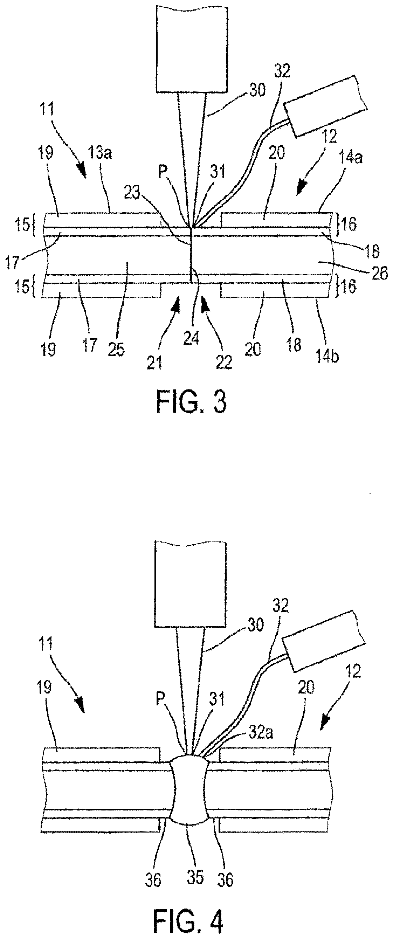

En référence à la figure 3, une première tôle 11 et une seconde tôle 12 présentant chacune un substrat respectif 25,26 et présentant chacune sur leurs faces respectives opposées 13a,13b ;14a ;14b un pré-revêtement 15,16 constitué d'une couche d'alliage intermétallique 17,18 surmontée d'une couche d'alliage métallique 19,20, sont amenées en bout à bout selon les pratiques habituelles du soudage laser par contact entre leurs périphéries respectives 21,22 sur lesquelles d'une part la couche d'alliage métallique 19,20 a été retirée au niveau de leurs faces opposées 13a,13b ;14a ; 14b, et sur les tranches 23,24 desquelles le pré-revêtement 15,16 entraîné lors de l'opération de cisaillage, a également été ôté.

La distance maximum entre les tranches respectives 23,24 des deux tôles 11,12 est de 0,1 millimètre, l'aménagement de ce jeu entre les tranches 23,24 des deux tôles 11,12 favorisant le dépôt du métal d'apport lors de l'opération de soudage.

Comme illustré sur la figure 3, l'opération de soudage selon le procédé de l'invention consiste en un faisceau laser 30 dirigé au niveau de la jonction entre les deux tôles 11,12, combiné à un fil d'apport 32 fondant au point d'impact 31 du faisceau Laser. Il s'agit donc d'un procédé de soudage laser avec métal d'apport.

La source laser utilisée doit être de haute puissance et peut être choisie parmi une source laser de type laser gaz $CO_2$ de longueur d'onde de 10 micromètres ou une source laser état solide de longueur d'onde de 1 micromètre.

En raison de l'épaisseur des deux tôles 11,12 qui est inférieure à 3 millimètres, la puissance du laser gaz $CO_2$ sera supérieure ou égale à 7 kilowatts tandis que la puissance du laser état solide sera supérieure ou égale à 4 kilowatts.

Par ailleurs, le diamètre du faisceau laser à l'endroit de son impact sur les tôles sera d'environ 600 micromètres pour les deux types de source laser.

Enfin, l'extrémité 32a du fil d'apport 32 sera située à environ 3 millimètres par rapport au point d'impact P du faisceau laser 30 sur la jonction entre les tôles 11 et 12 pour une source laser état solide et à environ 2 millimètres du faisceau laser 30 pour une source laser de type laser gaz $CO_2$.

Ces conditions vont permettre d'obtenir une fusion complète du fil d'apport 32 ainsi qu'un mélange satisfaisant avec le substrat en acier au niveau de la soudure.

Par ailleurs, ces puissances vont permettre de mettre en oeuvre une vitesse de soudage suffisante pour éviter la précipitation de nitrures de bore et/ou d'autres problèmes de ségrégation.

Le fil d'apport doit répondre à deux exigences :

- en premier lieu, la quantité de métal apporté par ce fil d'apport 32 doit permettre à la source laser de provoquer sa fusion en totalité et de générer un mélange relativement homogène au niveau de la soudure. Par ailleurs, la quantité de métal apportée ne doit pas conduire à une surépaisseur de la soudure de plus de 10% par rapport à l'épaisseur la moins importante des deux tôles si ces dernières ne présentent pas la même épaisseur, conformément aux normes qualité automobile en vigueur.

- en outre, la composition du fil d'apport doit permettre, en combinaison avec les autres paramètres du procédé de soudage, l'obtention d'une soudure dont les caractéristiques de résistance mécanique sont comparables, après déformation à chaud et refroidissement, aux caractéristiques de résistance mécanique des première 11 et seconde 12 tôles soudées.

Enfin, au cours de l'étape de soudage, une protection gazeuse doit être assurée pour éviter l'oxydation et la décarburation de la zone faisant l'objet de la soudure, pour éviter la formation de nitrure de bore dans la zone fondue et les phénomènes éventuels de fissuration à froid induits par l'absorption d'hydrogène.

Cette protection gazeuse est réalisée par l'utilisation d'Hélium et/ou d'Argon.

En référence à la figure 4, l'opération de soudage conduit à la formation d'une zone fondue 35 à la jonction entre les deux tôles 11,12 qui se solidifie ultérieurement en formant la soudure. La dénomination de « zone fondue » est conservée pour identifier cette soudure, même après solidification de cette zone fondue 35.

On peut prévoir pour les parties qui subiraient un refroidissement local moins rapide lors de l'emboutissage à chaud d'apporter un fil d'apport uniquement dans certaines parties de la longueur de la zone fondue et ne pas apporter de fil d'apport dans les jonctions restantes.

Le flan soudé 37 résultant de l'opération de soudage présente ainsi une zone fondue 35 dépourvue d'alliage intermétallique du fait de l'enlèvement préalable de la couche d'alliage métallique 19,20 comme explicité précédemment.

Par ailleurs, comme le montre la figure 4, les abords 36 à proximité directe de la zone fondue 35 sont exempts de couche d'alliage métallique 19,20 en raison du fait que la largeur de la zone fondue 35 est inférieure à la largeur de la zone de soudage ne comportant pas de couche d'alliage métallique 19,20.

Bien que la figure 4 illustre le cas simple d'un flan soudé réalisé à partir d'une première 11 et d'une seconde 12 tôles, il est possible de mettre en oeuvre l'invention à partir d'un plus grand nombre de tôles soudées entre elles.

Le flan soudé 37 ainsi obtenu subit ensuite un chauffage de façon à obtenir une transformation austénitique dans l'ensemble des parties de ce flan. On déforme celui-ci à chaud, préférentiellement par emboutissage à chaud. Cette étape est suivie d'un refroidissement opéré par contact dans l'outil d'emboutissage à une vitesse de refroidissement dont il sera discuté plus loin, et conduit à l'obtention d'une pièce d'acier soudée.

Dans la description qui suit, la référence à une pièce d'acier soudée se rapporte à la pièce finie issue de l'emboutissage à chaud du flan soudé dont la réalisation est décrite plus haut.

Pour un acier de type 22MnB5 (C=0,20-0,25%, Mn=1,1-1,35%, Si=0,15-0,35%, Al=0,020-0,060%, Ti=0,020-0,050%, Cr=0,15-0,30%, B=0,002-0,004%, les teneurs étant exprimées en poids et le solde étant du fer et des impuretés résultant de l'élaboration), le tableau 1 ci-dessous présente les conditions de procédé de soudage utilisées pour réaliser une pièce d'acier soudée pour laquelle la dureté de la zone fondue et emboutie à chaud est au moins égale à la dureté de l'une ou l'autre des deux tôles 11,12.

Ces conditions sont données en termes de vitesse de soudage, de proportion volumique de métal d'apport par rapport à la zone fondue et de composition chimique du fil d'apport exprimé en pourcentage massique. Les essais ayant conduit à ces conditions limites ont été réalisés avec une source laser gaz $CO_2$ de puissance supérieure à 7 kilowatts et une source laser état solide de puissance supérieure à 4 kilowatts sous protection gazeuse d'Hélium et/ou d'Argon de débit supérieur à 15 litres/minutes.

Tableau 1

|  | Vitesse de soudage (m/mn) | Proportion de métal d'apport (%) | Composition du fil d'apport - % massique | | | | |
|---|---|---|---|---|---|---|---|
|  |  |  | C | Mn | Si | Cr | Ti |
| Minimum | 3 | 10 | 0,6 | 1 | 0,1 | 0 | 0 |
| Maximum | 8 | 26 | 1,5 | 4 | 0,6 | 2 | 0,2 |

Dans le cadre d'un autre exemple, des essais sont réalisés avec un fil d'apport dont la composition comprend les teneurs en poids suivantes : C=0,7%, Si =0,4%, Mn=2%, Cr=1% et Ti=0,2, le reste étant du fer et des impuretés résultant de l'élaboration.

Les essais sont réalisés avec une source laser gaz $CO_2$ de puissance supérieure à 7 kilowatts et une source laser état solide de puissance supérieure à 4 kilowatts sous protection gazeuse d'Hélium et/ou d'Argon de débit supérieur à 15 litres/minutes. Tous les résultats obtenus présentés ci après sont similaires quelle que soit la source laser utilisée.

En référence à la figure 8, l'aspect de la zone fondue et la qualité du mélange du fil d'apport et du métal fondu sont examinés pour des pourcentages de métal d'apport et des vitesses de soudage différentes.

Pour les points expérimentaux référencés 40 et 41, les résultats en termes de dilution et d'aspect de surface de la zone fondue sont satisfaisants, tandis que pour les points expérimentaux référencés 42, les résultats ne sont pas satisfaisants.

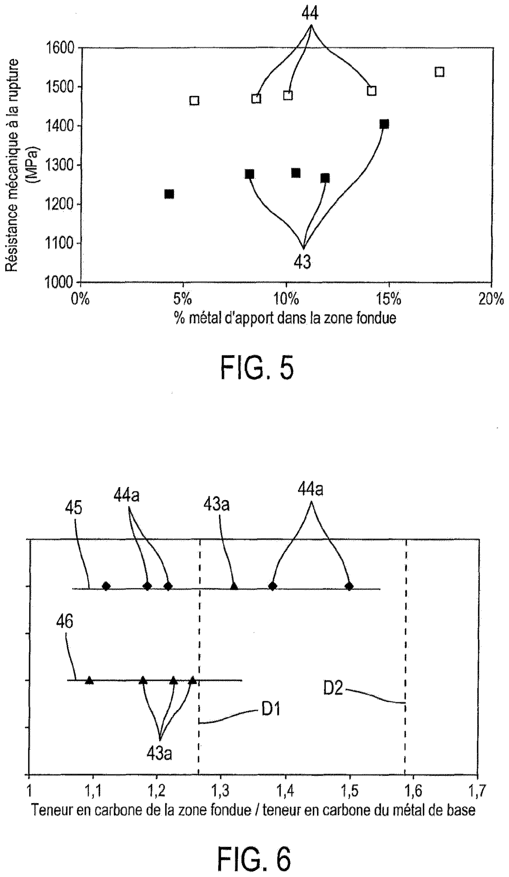

La figure 5 illustre la résistance à la rupture en traction de la pièce d'acier soudée emboutie à chaud en fonction du pourcentage de métal d'apport dans la zone fondue, pour deux vitesses de refroidissement de 30 et 50°C/s.

Les points expérimentaux référencés 43 correspondent à une vitesse de refroidissement de 30°C par seconde et les points expérimentaux référencés 44 correspondent à une vitesse de refroidissement de 50 °C par seconde. Ces deux vitesses correspondent respectivement à une extraction efficace de la chaleur grâce à un contact étroit entre la pièce et l'outillage de presse (50°C/s) et à un contact moins étroit en raison d'une pression de serrage moins élevée et/ou d'une différence d'épaisseur entre les tôles à souder (30°C/s)

Lorsque les flans soudés emboutis à chaud sont refroidis à une vitesse de 50°C par seconde, la résistance mécanique à la rupture est comprise entre 1470 et 1545 MPa et la rupture intervient dans le métal de base.

Lorsque les flans soudés emboutis à chaud sont refroidis à une vitesse de 30°C par seconde, et lorsque la proportion volumique de métal d'apport est comprise entre 4,3 et 11,5%, la rupture s'effectue dans la zone fondue et la résistance mécanique à la rupture est comprise entre 1230 et 1270 MPa.

En revanche, lorsque les flans soudés emboutis à chaud sont refroidis à une vitesse de 30°C par seconde, et lorsque la proportion volumique de métal d'apport est de 14,7%, la rupture s'effectue dans le métal de base avec une résistance mécanique de 1410 MPa.

Ainsi, une proportion de métal d'apport supérieure à 12% permet d'obtenir systématiquement une rupture en dehors du joint soudé, ceci aussi bien dans des zones refroidies efficacement dans la pièce emboutie, que dans les zones refroidies moins efficacement.

La figure 6 présente la localisation de la rupture, soit dans le métal de base selon le palier 45, soit dans la zone fondue selon le palier 46, lorsque les joints soudés sont soumis à une traction uniaxiale perpendiculaire au joint, en fonction du rapport entre la teneur en carbone de la zone fondue et la teneur en carbone du métal de base et ce, à partir des points expérimentaux 43, 44 présentés en référence à la figure 5 et référencés respectivement 43a et 44a sur la figure 6.

On fait apparaître que lorsque ce rapport est supérieur à 1,27 (droite D1), la rupture se produit systématiquement dans le métal de base et ce, en dépit des modifications de trempabilité dues à la présence d'aluminium dans la zone fondue, et en dépit de la vitesse de refroidissement plus lente résultant d'un contact imparfait entre la pièce et l'outillage. Il est également indiqué sur la figure 6 qu'au delà d'un rapport de 1,59 (droite D2), il apparaît une fragilité particulière.

Ce rapport maximum de 1,59 entre la teneur en carbone de la zone fondue et la teneur en carbone du métal de base est également obtenu en déterminant les conditions critiques qui conduisent à la rupture brutale d'une soudure à structure martensitique comportant un défaut de surface, sollicitée perpendiculairement au sens de soudage.

A cet effet, on considère le cas de deux tôles 11,12 dont l'épaisseur w est de 3 millimètres, et d'un défaut de type caniveau dans la zone fondue dont la profondeur est de 10% de l'épaisseur des tôles 11,22, soit d'une profondeur a de 0,3 millimètres.

L'expression du facteur d'intensité de contrainte $K_I$ exprimé en $MPa\sqrt{m}$ est la suivante :

$$K_I = k\sigma\sqrt{\pi a}$$

dans laquelle

- k est le facteur de forme, déterminé notamment à partir du rapport a/w
- $\sigma$ est la contrainte appliquée à la soudure, exprimée en MPa, et
- a est la profondeur du défaut considéré exprimé en mètres.

Pour évaluer le facteur d'intensité de contrainte, on considère un cas de sollicitation sévère, où la contrainte appliquée $\sigma$ est égale à la limite d'élasticité Re.

Le tableau 2 ci-dessous exprime la limite d'élasticité Re et le facteur d'intensité de contrainte $K_I$ pour des teneurs en carbone dans la zone fondue variant entre 0,2% et 0,4%, pour une microstructure martensitique.

Tableau 2

|  | 0,2% C | 0,3% C | 0,35% C | 0,4% C |
|---|---|---|---|---|
| Re (MPa) | 1200 | 1350 | 1425 | 1500 |
| $K_I (MPa\sqrt{m})$ | 41,3 | 46,4 | 49,0 | 51,6 |

On se réfère à la figure 9 sur laquelle est reportée la variation du facteur d'intensité de contrainte critique $K_{IC}$ en fonction de la température, pour des teneurs en carbone variant entre 0,2 et 0,4% et des microstructures martensitiques. La courbe 60 concerne une teneur en carbone de 0,2%C, la courbe 61 concerne une teneur en carbone de 0,3%C, la courbe 62 concerne une teneur en carbone de 0,35%C et la courbe 63 concerne une teneur en carbone de 0,4%C.

On reporte sur cette figure 9 les valeurs du facteur d'intensité de contrainte $K_I$ exprimées dans le tableau 2 pour chacune des teneurs en carbone respectivement référencés 64 pour une teneur en carbone de 0,2%C, 65 pour une teneur en carbone de 0,3%, 66 pour une teneur en carbone de 0,35% et 67 pour une teneur en carbone de 0,4%.

Le risque de rupture brutale à -50°C de la soudure est donc évité lorsque la ténacité $K_{IC}$ à cette température est supérieure au facteur d'intensité de contrainte $K_I$.

On constate à la figure 9 que cette condition est remplie pour autant que la teneur en carbone n'excède pas 0,35%.

On aboutit ainsi à une teneur maximum en carbone dans la zone fondue de 0,35%. En considérant un joint soudé réalisé à partir de deux tôles d'acier de type 22MnB5, c'est-à-dire contenant 0,22%C de carbone, la valeur limite du rapport entre la teneur en carbone de la zone fondue et la teneur en carbone de la tôle d'acier, au-delà duquel existe un risque de rupture brutale dans la zone fondue, est donc égal à 1,59.

Par ailleurs, le fait que la rupture intervienne toujours dans le métal de base au-delà de cette valeur de 1,27 est inattendu car la ténacité du métal fondu décroît lorsque la teneur en carbone augmente. Conjugué à l'effet de concentration de contraintes inévitable dans le joint soudé, la rupture aurait dû plutôt intervenir dans le métal fondu par manque de ténacité pour les teneurs en carbone les plus élevées.

A cet effet, on a comparé le risque de rupture brutale à -50°C dans une soudure, tel que déterminé dans les conditions ci-dessus, avec le risque de rupture brutale à cette même température dans le métal de base, celui-ci comportant un défaut dans l'épaisseur de son revêtement métallique.

On considère un micro-défaut de 30 micromètres de profondeur correspondant à l'épaisseur du revêtement d'alliage métallique. Pour un acier de type 22MnB5 avec une teneur en carbone de 0,22%, la limite d'élasticité Re est de 1250 MPa. Si cet acier est sollicité sous un niveau de contrainte égale à sa limite d'élasticité, le facteur d'intensité de contrainte $K_I$ est de 13,6 $MPa.\sqrt{m}$ .

En reportant cette dernière valeur sur la figure 9 sous la référence 68, on constate que théoriquement, la rupture brutale devrait se produire dans la zone fondue et non dans le métal de base. Or contrairement à ce qui était attendu, les inventeurs ont constaté que lorsque le rapport entre teneur en carbone de la zone fondue et la teneur en carbone du métal de base est compris entre 1,27 et 1,59, la rupture intervient systématiquement dans le métal de base et non dans la zone fondue. En résumé, les inventeurs ont constaté que l'augmentation de la teneur carbone dans cette gamme spécifique permettait d'accroître les caractéristiques de résistance de la zone fondue de la pièce emboutie à chaud, et ceci sans dégradation du risque de rupture brutale dans cette zone, effet qui n'était pas attendu.

Par ailleurs, les inventeurs ont cherché à définir une méthode simple pour définir la zone de l'invention à partir des caractéristiques de dureté de la zone fondue et du métal de base avoisinant sur la pièce emboutie à chaud. La dureté importante de la zone fondue est liée à sa microstructure martensitique exempte de ferrite. Il est connu que la dureté d'un acier à structure martensitique dépend principalement de sa teneur en carbone. Par conséquent, il est possible de définir à partir des résultats ci-dessus, le rapport Z entre la dureté de la zone fondue et la dureté du métal de base avoisinant qu'il convient de respecter.

Dans le cas du soudage de tôles de composition différente, Cmax désigne la teneur en carbone de celle des tôles qui comporte la plus forte teneur en carbone. Dans le cas de soudage de tôles identiques, Cmax désigne leur teneur en carbone. Une rupture dans le métal de base lors d'une sollicitation en traction d'un joint soudé intervient lorsque le rapport Z est supérieur à une valeur critique dépendant de Cmax soit 1,029+ (0,36 Cmax).

Pour le soudage de tôles identiques contenant 0,22%C, une rupture en métal de base est ainsi observée lorsque le rapport Z est supérieur à 1,108, c'est-à-dire lorsque la dureté de la zone fondue excède d'environ 11% la dureté du métal de base.

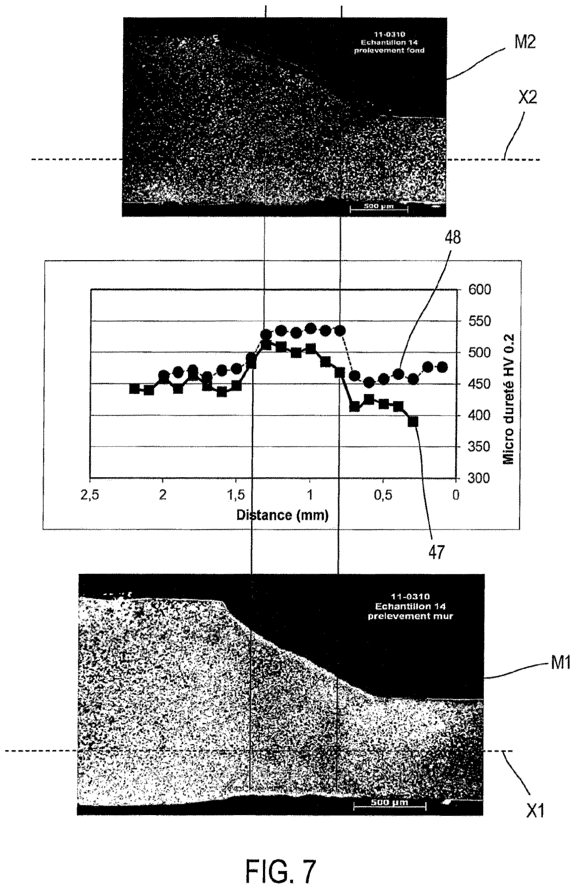

En référence à la figure 7, les courbes 47 et 48 représentent l'évolution de la microdureté dans la zone soudée et dans les zones avoisinantes de la zone soudée représentée sur les micrographies respectives M1 et M2, pour un pourcentage volumique de métal d'apport de 15% et pour des épaisseurs différentes de tôles soudées.

Pour la courbe 47, relative à une vitesse de refroidissement de 30°C par seconde, les mesures de microdureté sont effectuées au niveau du bord latéral de la zone fondue à mi-épaisseur de la tôle la plus fine comme illustré sur la micrographie M1 par la ligne pointillée X1.

Pour la courbe 48, relative à une vitesse de refroidissement de 50°C par seconde les mesures de microdureté sont effectuées au niveau du fond de la zone soudée à mi-épaisseur de la tôle la plus fine comme illustré sur la micrographie M2 par la ligne pointillée X2.

En référence à la figure 8, les conditions limites préférentielles en termes de pourcentage de métal d'apport et de vitesse de soudage pour la composition spécifique de fil d'apport définie plus haut et comprenant une teneur en carbone de 0,7% sont définies par la zone hachurée 50.

Cette zone 50 est délimitée par quatre frontières 51, 52, 53, 54.

La première frontière 51 définit la limite inférieure de pourcentage du métal d'apport. Le pourcentage de métal d'apport doit ainsi être supérieur à 12% pour éviter que la zone soudée ne présente des caractéristiques de résistance mécanique trop faibles.

La deuxième frontière 52 définit la limite supérieure de pourcentage du métal d'apport. Le pourcentage de métal d'apport doit ainsi être inférieur à 26% puisque au delà de cette limite, la zone soudée présente une fragilité incompatible avec les propriétés requises.

La troisième frontière 53 définit la limite inférieure de la vitesse de soudage. La vitesse de soudage doit ainsi être supérieure à 3 mètres par minutes de façon à obtenir une géométrie satisfaisante du cordon de soudure et à éviter les phénomènes d'oxydation.

Enfin, la quatrième frontière 54 définit la limite supérieure de la vitesse de soudage et présente une forme courbe.

Cette quatrième frontière 54 est définie à partir des points expérimentaux 40,41,42 déjà discutés et pour lesquels les points expérimentaux 42 correspondent à des échantillons pour lesquels le mélange entre le métal d'apport et le métal de base est insuffisant et/ou la soudure n'est pas suffisamment pénétrante.

Par ailleurs, la conformation courbée de cette quatrième frontière 54 est estimée au regard des impératifs propres à l'opération de soudage.

En effet, la capacité de la source laser à faire fondre le fil d'apport et à engendrer un mélange relativement homogène influe sur le pourcentage maximum de métal d'apport et sur la vitesse de soudage.

A cet effet, pour une vitesse de soudage de 4 mètres par minutes par exemple, le pourcentage de métal d'apport ne sera pas supérieur à environ 25%.

Pour une vitesse de soudage plus élevée, la proportion de métal d'apport sera limitée.

En approximation de cette quatrième frontière 54, on estime l'équation de la droite 55 passant par un premier point 56 situé à la jonction entre la partie supérieure de la quatrième frontière 54 et la deuxième frontière 52, et par un second point 57 situé à la jonction entre la partie inférieure de la quatrième frontière 54 et la première frontière 51.

L'équation de cette droite 55 est $Y=-3,86X+39,5$ ou Y est le pourcentage de métal d'apport et X est la vitesse de soudage exprimée mètre par minutes.

On pourra ainsi considérer de façon approximative que la quatrième frontière définissant la limite maximum de la vitesse de soudage est définie par la droite 55 pour une vitesse de soudage supérieure à 3,5 mètres par minute.

Ainsi, l'invention permet de réaliser de façon économique des pièces de structures et de sécurité pour le domaine automobile.

**Revendications**

1. Pièce d'acier soudée, à très hautes caractéristiques de résistance mécanique, obtenue à partir d'un chauffage dans le domaine austénitique suivi d'une mise en forme à chaud puis d'un refroidissement d'au moins un flan soudé obtenu par soudage en bout à bout d'au moins une première et une seconde tôles constituées au moins en partie d'un substrat en acier et d'un pré-revêtement qui est constitué d'une couche d'alliage intermétallique en contact avec le substrat en acier, surmontée d'une couche en alliage métallique en alliage d'aluminium ou à base d'aluminium, **caractérisée en ce que** les abords (36) à proximité directe de la zone fondue (35) résultant de l'opération de soudage et constituant la liaison entre la première et la seconde tôles (11,12), sont dépourvus de la couche d'alliage métallique (19,20) tout en étant pourvus de la couche d'alliage intermétallique (17,18), **en ce que**, sur au moins une partie de la longueur de la zone fondue (35), le rapport entre la teneur en carbone et la teneur en carbone du substrat (25,26) de l'une des première ou seconde tôle (11,12) présentant la teneur en carbone (Cmax) la plus élevée est compris entre 1,27 et 1,59 et **en ce que** la composition du substrat (25,26) d'au moins la première ou la seconde tôle (11,12) comprend, les teneurs étant exprimées en poids :

   $0,10\% \le C \le 0,5\%$
   $0,5\% \le Mn \le 3\%$
   $0,1\% \le Si \le 1\%$
   $0,01\% \le Cr \le 1\%$
   $Ti \le 0,2\%$
   $Al \le 0,1\%$
   $S \le 0,05\%$
   $P \le 0,1\%$
   $0,0002\% \le B \le 0,010\%$

   le solde étant du fer et des impuretés inhérentes à l'élaboration.

2. Pièce d'acier selon la revendication 1, **caractérisée en ce que** le rapport (Z) entre la dureté de la zone fondue (35) et la dureté du substrat (25,26) de l'une des première ou seconde tôle (11,12) présentant la teneur en carbone (Cmax) la plus élevée, est supérieur à 1,029 + (0,36 Cmax), Cmax étant exprimé en pourcentage pondéral.

3. Pièce d'acier selon l'une quelconque des revendications 1 et 2, **caractérisée en ce que** la composition la composition du substrat (25,26) d'au moins la première ou la seconde tôle (11,12) comprend, les teneurs étant exprimées en poids :

$0,15\% \leq C \leq 0,4\%$
$0,8\% \leq Mn \leq 2,3\%$
$0,1\% \leq Si \leq 0,35\%$
$0,01\% \leq Cr \leq 1\%$
$Ti \leq 0,1\%$
$Al \leq 0,1\%$
$S \leq 0,03\%$
$P \leq 0,05\%$
$0,0005\% \leq B \leq 0,010\%$

le solde étant du fer et des impuretés inhérentes à l'élaboration.

4. Pièce d'acier selon l'une quelconque des revendications 1 et 2, **caractérisée en ce que** la composition la composition du substrat (25,26) d'au moins la première ou la seconde tôle (11,12) comprend, les teneurs étant exprimées en poids :

$0,15\% \leq C \leq 0,25\%$
$0,8\% \leq Mn \leq 1,8\%$
$0,1\% \leq Si \leq 0,35\%$
$0,01\% \leq Cr \leq 0,5\%$
$Ti \leq 0,1\%$
$Al \leq 0,1\%$
$S \leq 0,05\%$
$P \leq 0,1\%$
$0,0002\% \leq B \leq 0,005\%$

le solde étant du fer et des impuretés inhérentes à l'élaboration.

5. Pièce d'acier selon l'une quelconque des revendications précédentes, **caractérisée en ce que** la teneur en carbone de la zone fondue (35) est inférieure ou égale à 0,35% en poids.

6. Pièce d'acier selon l'une quelconque des revendications précédentes **caractérisée en ce que** la couche d'alliage métallique (17,18) du pré-revêtement(15,16) comprend, les teneurs étant exprimées en poids, entre 8 et 11% de silicium, entre 2 et 4 % en fer, le reste de la composition étant de l'aluminium et des impuretés inévitables.

7. Pièce d'acier selon l'une quelconque des revendications précédentes, **caractérisée en ce que** la microstructure de la zone fondue (35) est dépourvue de ferrite.

8. Pièce d'acier selon l'une quelconque des revendications précédentes, **caractérisée en ce que** la microstructure de la zone fondue (35) est martensitique.

9. Pièce d'acier selon l'une quelconque des revendications précédentes, **caractérisée en ce que** ladite mise en forme à chaud du flan soudé est réalisée par une opération d'emboutissage à chaud.

10. Pièce d'acier selon l'une quelconque des revendications précédentes, **caractérisée en ce que** les tranches respectives (23,24) des bords périphériques (21,22) des première (11) et seconde (12) tôles destinées à subir l'opération de soudage sont dépourvues d'aluminium ou d'alliage d'aluminium.

11. Procédé de fabrication d'une pièce d'acier soudée selon l'une quelconque des revendications 1 à 10, **caractérisé en ce qu'**il comprend les étapes successives selon lesquelles :

- on approvisionne au moins une première (11) et une seconde (12) tôles d'acier constituées d'un substrat en acier (25,26) et d'un pré-revêtement (15,16) qui est constitué d'une couche d'alliage intermétallique (17,18) en contact avec le substrat en acier, surmontée d'une couche d'alliage métallique (19,20) laquelle est en alliage d'aluminium ou à base d'aluminium, et pour lesquelles au moins une face (13a,13b ;14a,14b) d'une partie d'un bord périphérique (21,22) de chacune des première (11) et seconde tôles (12) d'acier destinée à subir l'opération de soudage est dépourvue de la dite couche d'alliage métallique (19,20) en laissant en place la couche d'alliage intermétallique (17,18), et pour lesquelles les tranches respectives (23,24) des bords périphériques (21,22) des première (11) et seconde (12) tôles destinés à subir l'opération de soudage sont dépourvues d'aluminium ou d'alliage d'aluminium dont la présence peut résulter d'une opération préalable de découpe de chacune des première (11) et seconde (12) tôles, puis

- on soude sous protection gazeuse en bout à bout la première (11) et la seconde (12) tôle d'acier au niveau des bords périphériques respectifs (21,22) de ces première (11) et seconde (12) tôles d'acier dépourvus de la couche d'alliage métallique (19,20) au moyen d'une source laser (30) et en utilisant un fil d'apport de matière (32) sur au moins une partie de la longueur de la zone soudée, le fil d'apport de matière (32) comportant une teneur en carbone supérieure au substrat (25,26) de l'une au moins des deux tôles (11,12), le fil d'apport comprenant, les teneurs étant exprimées en poids :

$0,6\% \leq C \leq 1,5\ \%$
$1\% \leq Mn \leq 4\%$
$0,1\% \leq Si \leq 0,6\%$
$Cr \leq 2\%$
$Ti \leq 0,2\ \%$

le solde étant du fer et des impuretés inhérentes à l'élaboration, et
la protection gazeuse étant réalisée par l'utilisation d'hélium et/ou d'argon,

- on obtient un flan soudé (37) dans lequel la teneur en carbone de la zone fondue (35) résultant de l'opération de soudage et constituant la liaison entre les première (11) et seconde (12) tôles est comprise entre 1,27 et 1,59 fois la teneur en carbone du substrat (25,26) de la tôle (11,12) présentant la teneur en carbone la plus élevée, puis

- on chauffe ledit flan soudé (37) de manière à conférer dans la zone fondue (35), une structure totalement austénitique, puis

- on met en forme à chaud ledit flan soudé et chauffé pour obtenir une pièce d'acier, puis

- on refroidit ladite pièce d'acier à vitesse contrôlée pour obtenir les caractéristiques de résistance mécanique visées,

et **en ce que** la composition du substrat (25,26) d'au moins la première ou la seconde tôle (11,12) comprend, les teneurs étant exprimées en poids :

$0,10\% \leq C \leq 0,5\%$
$0,5\% \leq Mn \leq 3\%$
$0,1\% \leq Si \leq 1\%$
$0,01\% \leq Cr \leq 1\%$
$Ti \leq 0,2\%$
$Al \leq 0,1\%$
$S \leq 0,05\%$
$P \leq 0,1\%$
$0,0002\% \leq B \leq 0,010\%$

le solde étant du fer et des impuretés inhérentes à l'élaboration.

**12.** Procédé selon la revendication 11, **caractérisé en ce que** les faces opposées (13a, 13b ,14a, 14b) des bords périphériques respectifs (21,22) de chacune des première (11) et seconde tôles d'acier (11,12) sont dépourvues de couche d'alliage métallique (19,20) en laissant en place la couche d'alliage intermétallique (17,18).

**13.** Procédé selon l'une quelconque des revendications 11 et 12, **caractérisé en ce que** la largeur de la zone dépourvue de couche d'alliage métallique (19,20) au niveau du bord périphérique (21,22) des première (11) et seconde (12) tôles destiné à subir l'opération de soudage est comprise entre 0,2 et 2,2 millimètres.

**14.** Procédé selon l'une quelconque des revendications 11 à 13, **caractérisé en ce que** la composition du substrat (25,26) d'au moins la première ou la seconde tôle (11,12) comprend, les teneurs étant exprimées en poids :

$0,15\% \leq C \leq 0,4\%$
$0,8\% \leq Mn \leq 2,3\%$
$0,1\% \leq Si \leq 0,35\%$
$0,01\% \leq Cr \leq 1\%$

Ti ≤ 0,1%
Al ≤ 0,1%
S ≤ 0,03%
P ≤ 0,05%
0,0005% ≤ B ≤ 0,010%

le solde étant du fer et des impuretés inhérentes à l'élaboration.

15. Procédé selon la revendication 13, **caractérisé en ce que** la composition du substrat (25,26) d'au moins la première ou la seconde tôle (11,12) comprend, les teneurs étant exprimées en poids :

0,15% ≤ C ≤ 0,25%
0,8% ≤ Mn ≤ 1,8%
0,1% ≤ Si ≤ 0,35%
0,01% ≤ Cr ≤ 0,5%
Ti ≤ 0,1%
Al ≤ 0,1%
S ≤ 0,05%
P ≤ 0,1%
0,0002% ≤ B ≤ 0,005%

le solde étant du fer et des impuretés inhérentes à l'élaboration.

16. Procédé selon l'une quelconque des revendications 11 à 15, **caractérisé en ce que** lors de l'étape de soudage, les bords périphériques (21,22) à souder des première (11) et seconde (12) tôles d'acier sont disposés à une distance maximum l'un de l'autre de 0,1 millimètres.

17. Procédé selon l'une quelconque des revendications 11 à 16, **caractérisé en ce que** l'énergie linéaire de soudage de ladite source laser lors de l'opération de soudage est supérieure à 0,3 kJ/cm.

18. Procédé selon la revendication 17, **caractérisé en ce que** la source laser est soit de type Laser Gaz $CO_2$ conférant une énergie linéaire de soudage supérieure à 1,4 kJ/cm, soit de type Laser état solide conférant une énergie linéaire de soudage supérieure à 0,3kJ/cm.

19. Procédé selon l'une quelconque des revendications 17 et 18, **caractérisé en ce que** la vitesse de soudage est comprise entre 3 mètres/minutes et 8 mètres/minutes, et **en ce que** la puissance du Laser Gaz $CO_2$ est supérieure ou égale à 7 kW et la puissance du Laser état solide est supérieure ou égale à 4kW.

20. Procédé selon l'une quelconque des revendications 11 à 19, **caractérisé en ce que** l'étape de soudage est réalisée sous protection gazeuse d'Hélium et/ou d'Argon.

21. Procédé selon la revendication 20, **caractérisé en ce que** le débit d'Hélium et/ou d'Argon pendant l'étape de soudage est supérieur ou égal à 15 litres par minute.

22. Procédé selon l'une quelconque des revendications 11 à 21, **caractérisé en ce que** le fil d'apport comprend, les teneurs étant exprimées en poids :

0,65% ≤ C ≤ 0,75 %
1,95% ≤ Mn ≤ 2,05%
0,35% ≤ Si ≤ 0,45%
0,95% ≤ Cr ≤ 1,05%
0,15% ≤ Ti ≤ 0,25 %

le solde étant du fer et des impuretés inhérentes à l'élaboration.

23. Procédé selon la revendication 22, **caractérisé en ce que** la proportion de métal d'apport relativement au volume de la zone fondue (35) est comprise entre 12% et 26% et **en ce que** la vitesse de soudage est comprise entre 3 et 7 mètres par minute.

**24.** Procédé selon la revendication 23, **caractérisé en ce que** le couple constitué par ladite proportion de métal d'apport relativement au volume de la zone fondue (35) et la vitesse de soudage se situe au sein du domaine (50) illustré à la figure 8.

**25.** Procédé selon la revendication 24, **caractérisé en ce que** le couple constitué par ladite proportion de métal d'apport relativement au volume de la zone fondue (35) et la vitesse de soudage répond aux exigences combinées suivantes :

- la proportion de métal d'apport relativement au volume de la zone fondue (35) est comprise entre 12% et 26%, et

- la vitesse de soudage est comprise entre 3 et 7 mètres par minute, et

- lorsque la vitesse de soudage est supérieure à 3,5 mètres par minute, le couple constitué par la proportion de métal d'apport relativement au volume de la zone fondue (35) et la vitesse de soudage est telle que Y≤-3,86X+39,5, étant entendu que Y désigne la proportion de métal d'apport exprimée en pourcentage volumique, et que X désigne la vitesse de soudage exprimée en mètre par minute.

**26.** Procédé selon l'une quelconque des revendications 23 à 25, **caractérisé en ce que** la proportion du métal d'apport relativement au volume de la zone fondue (35) est comprise entre 14 et 16%, le débit d'Hélium et/ou d'Argon est compris entre 13 et 17 litres par minute, **en ce que** le diamètre au point d'impact sur la tôle du faisceau laser (30) est compris entre 500 et 700 micromètres, et **en ce que** l'extrémité (32a) du fil d'apport (32) est situé à une distance du point d'impact du faisceau Laser sur la tôle comprise entre 2 et 3 millimètres.

**27.** Procédé selon l'une quelconque des revendications 11 à 26, **caractérisé en ce que** la vitesse de refroidissement de la zone fondue (35) pendant l'étape de mise en forme à chaud est supérieure ou égale à la vitesse critique de trempe martensitique de la dite zone fondue (35).

**28.** Utilisation de la pièce d'acier selon l'une quelconque des revendications 1 à 10 pour la fabrication de pièces de structures ou de sécurité pour véhicule notamment automobile

**Patentansprüche**

**1.** Geschweißtes Stahlteil mit sehr hohen mechanischen Festigkeitseigenschaften, das ausgehend von einer Erwärmung im austenitischen Bereich, gefolgt von einer Warmformgebung und daraufhin von einer Abkühlung mindestens einer geschweißten Platte erhalten wird, die durch Stumpfschweißen mindestens eines ersten und eines zweiten Blechs erhalten wird, die mindestens teilweise aus einem Träger aus Stahl und einer Vorbeschichtung gebildet sind, die aus einer in Kontakt mit dem Träger aus Stahl liegenden Schicht einer intermetallischen Legierung, auf die eine Metalllegierungsschicht aus einer Aluminiumlegierung oder einer Legierung auf der Basis von Aluminium aufgebracht ist, besteht, **dadurch gekennzeichnet, dass** die Umgebungsbereiche (36) in direkter Nähe der aus dem Schweißvorgang resultierenden geschmolzenen Zone (35), die die Verbindung zwischen dem ersten und dem zweiten Blech (11, 12) bildet, keine Metalllegierungsschicht (19, 20) aufweisen, aber mit der Schicht der intermetallischen Legierung versehen sind, dass mindestens auf einem Teil der Länge der geschmolzenen Zone (35) das Verhältnis zwischen dem Kohlenstoffgehalt der geschmolzenen Zone und dem Kohlenstoffgehalt des Trägers (25, 26) eines des ersten oder zweiten Blechs (11, 12), das den höchsten Kohlenstoffgehalt (Cmax) aufweist, zwischen 1,27 und 1,59 liegt und dass die Zusammensetzung des Trägers (25, 26) mindestens des ersten oder des zweiten Blechs (11, 12) umfasst, wobei die Gehalte in Gewichtsprozenten ausgedrückt sind:

$0,10\% \leq C \leq 0,5\%$
$0,5\% \leq Mn \leq 3\%$
$0,1\% \leq Si \leq 1\%$
$0,01\% \leq Cr \leq 1\%$
$Ti \leq 0,2\%$
$Al \leq 0,1\%$
$S \leq =0,05\%$
$P \leq 0,1\%$
$0,0002\% \leq B \leq 0,010\%,$

wobei der Rest Eisen und aus der Bearbeitung stammende Verunreinigungen ist.

2. Stahlteil nach Anspruch 1, **dadurch gekennzeichnet, dass** das Verhältnis (Z) zwischen der Härte der geschmolzenen Zone (35) und der Härte des Trägers (25, 26) eines des ersten oder zweiten Blechs (11, 12), das den höchsten Kohlenstoffgehalt (Cmax) aufweist, größer als 1,029 + (0,36 Cmax) ist, wobei Cmax in Gewichtsprozenten ausgedrückt ist.

3. Stahlteil nach einem beliebigen der Ansprüche 1 und 2, **dadurch gekennzeichnet, dass** die Zusammensetzung des Trägers (25, 26) mindestens eines des ersten oder des zweiten Blechs (11, 12) umfasst, wobei die Gehalte in Gewichtsprozenten ausgedrückt sind:

$$0{,}15\% \leq C \leq 0{,}4\%$$
$$0{,}8\% \leq Mn \leq 2{,}3\%$$
$$0{,}1\% \leq Si \leq 0{,}35\%$$
$$0{,}01\% \leq Cr \leq 1\%$$
$$Ti \leq 0{,}1\%$$
$$Al \leq 0{,}1\%$$
$$S \leq 0{,}03\%$$
$$P \leq 0{,}05\%$$
$$0{,}0005\% \leq B \leq 0{,}010\%,$$

wobei der Rest Eisen und von der Bearbeitung stammende Verunreinigungen ist.

4. Stahlteil nach einem beliebigen der Ansprüche 1 und 2, **dadurch gekennzeichnet, dass** die Zusammensetzung des Trägers (25, 26) mindestens eines des ersten oder des zweiten Blechs (11, 12) umfasst, wobei die Gehalte in Gewichtsprozenten ausgedrückt sind:

$$0{,}15\% \leq C \leq 0{,}25\%$$
$$0{,}8\% \leq Mn \leq 1{,}8\%$$
$$0{,}1\% \leq Si \leq 0{,}35\%$$
$$0{,}01\% \leq Cr \leq 0{,}5\%$$
$$Ti \leq 0{,}1\%$$
$$Al \leq 0{,}1\%$$
$$S \leq 0{,}05\%$$
$$P \leq 0{,}1\%$$
$$0{,}0002\% \leq B \leq 0{,}005\%,$$

wobei der Rest Eisen und von der Bearbeitung stammende Verunreinigungen ist.

5. Stahlteil nach einem beliebigen der vorhergehenden Ansprüche, **dadurch gekennzeichnet, dass** der Kohlenstoffgehalt der geschmolzenen Zone (35) kleiner oder gleich 0,35 Gew.-% ist.

6. Stahlteil nach einem beliebigen der vorhergehenden Ansprüche, **dadurch gekennzeichnet, dass** die Metalllegierungsschicht (17, 18) der Vorbeschichtung (15, 16) in Gewichtsprozenten zwischen 8 und 11% Silizium, zwischen 2 und 4% Eisen umfasst, wobei der Rest der Zusammensetzung Aluminium und nicht vermeidbare Verunreinigungen ist.

7. Stahlteil nach einem beliebigen der vorhergehenden Ansprüche, **dadurch gekennzeichnet, dass** die Mikrostruktur der geschmolzenen Zone (35) keine Ferrite aufweist.

8. Stahlteil nach einem beliebigen der vorhergehenden Ansprüche, **dadurch gekennzeichnet, dass** die Mikrostruktur der geschmolzenen Zone (35) martensitisch ist.

9. Stahlteil nach einem beliebigen der vorhergehenden Ansprüche, **dadurch gekennzeichnet, dass** die Warmformgebung der geschweißten Platte durch einen Warmumformvorgang realisiert ist.

10. Stahlteil nach einem beliebigen der vorhergehenden Ansprüche, **dadurch gekennzeichnet, dass** die jeweiligen Randteile (23, 24) der Umfangsränder (21, 22) des ersten (11) und zweiten (12) Blechs, die vorgesehen sind, dem Schweißvorgang unterworfen zu werden, kein Aluminium oder keine Aluminiumlegierung aufweisen.

**11.** Verfahren zur Herstellung eines geschweißten Stahlteils nach einem beliebigen der vorhergehenden Ansprüche 1 bis 10, **dadurch gekennzeichnet, dass** es die aufeinanderfolgenden Schritte aufweist:

- Bereitstellen mindestens eines ersten (11) und eines zweiten (12) Stahlblechs, das aus einem Träger aus Stahl (25, 26) und einer Vorbeschichtung (15, 16) besteht, die durch eine Schicht einer intermetallischen Legierung (17, 18) in Kontakt mit dem Träger aus Stahl gebildet wird, auf die eine Metalllegierungsschicht (19, 20) aufgebracht wird, die eine Aluminiumlegierung oder eine Legierung auf der Basis von Aluminium ist, und für die mindestens eine Fläche (13a, 13b; 14a, 14b) eines Teils eines Umfangsrandes (21, 22) jedes des ersten (11) und zweiten (12) Stahlblechs, das vorgesehen ist, der Schweißoperation unterworfen zu werden, keine Metalllegierungsschicht (19, 20) aufweist, wobei die Schicht der intermetallischen Legierung (17, 18) verbleibt, und für die die jeweiligen Randteile (23, 24) der Umfangsränder (21, 22) des ersten (11) und zweiten (12) Blechs, die vorgesehen sind, dem Schweißvorgang unterworfen zu werden, kein Aluminium oder keine Aluminiumlegierung aufweisen, dessen Vorhandensein aus einer vorhergehenden Schneidoperation jedes des ersten (11) und des zweiten (12) Blechs resultieren kann, dann

- Stumpfschweißen des ersten (11) und zweiten (12) Stahlblechs an den jeweiligen Umfangsrändern (21, 22) dieses ersten (11) und zweiten (12) Stahlblechs, die keine Metalllegierungsschicht (19, 20) aufweisen, mittels einer Laserquelle (30) unter Schutzgasatmosphäre und unter Verwendung eines Drahtes (32) zur Zuführung von Material über mindestens einen Teil der Länge der Schweißzone, wobei der Draht (32) zur Zuführung von Material einen Kohlenstoffgehalt größer als den des Trägers (25, 26) mindestens eines der zwei Bleche (11, 12) aufweist, wobei der Zuführungsdraht umfasst, wobei die Gehalte in Gewichtsprozenten ausgedrückt sind:

$0,6\% \leq C \leq 1,5\%$
$1\% \leq Mn \leq 4\%$
$0,1\% \leq Si \leq 0,6\%$
$Cr \leq 2\%$
$Ti \leq 0,2\%$,

wobei der Rest Eisen und durch die Bearbeitung verursachte Verunreinigungen ist,
wobei die Schutzgasatmosphäre durch Benutzung von Helium und/oder Argon erhalten wird,
- Erhalt einer geschweißten Platte (37), bei der der Kohlenstoffgehalt der geschweißten Zone (35), die aus dem Schweißvorgang resultiert und die Verbindung zwischen dem ersten (11) und zweiten (12) Blech bildet, zwischen 1,27 und 1,59 mal den Kohlenstoffgehalt des Trägers (25, 26) des Blechs (11, 12) beträgt, das den höchsten Kohlenstoffgehalt aufweist, dann
- Aufheizen der geschweißten Platte (37), um der geschmolzenen Zone (35) eine vollständig austenitische Struktur zu verleihen, dann
- Warmformen der aufgeheizten und geschweißten Platte, um ein Stahlteil zu erhalten, dann
- Abkühlen des Stahlteils mit kontrollierter Geschwindigkeit, um die angestrebten mechanischen Festigkeitseigenschaften zu erhalten, und dass die Zusammensetzung des Trägers (25, 26) mindestens eines des ersten oder des zweiten Blechs (11, 12) umfasst, wobei der Gehalte in Gewichtsprozenten ausgedrückt sind:

$0,10\% \leq C \leq 0,5\%$
$0,5\% \leq Mn \leq 3\%$
$0,1\% \leq Si \leq 1\%$
$0,01\% \leq Cr \leq 1\%$
$Ti \leq 0,2\%$
$Al \leq 0,1\%$
$S \leq 0,05\%$
$P \leq 0,1\%$
$0,0002\% \leq B \leq 0,010\%$,

wobei der Rest Eisen und die der Bearbeitung inhärenten Verunreinigungen ist.

**12.** Verfahren nach Anspruch 11, **dadurch gekennzeichnet, dass** die gegenüberliegenden Flächen (13a, 13b, 14a, 14b) der jeweiligen Umfangsränder (21, 22) jedes des ersten (11) und des zweiten Stahlblechs (11, 12) keine Metalllegierungsschicht (19, 20) aufweisen, wobei die Schicht (17, 18) der intermetallischen Legierung aufrecht erhalten bleibt.

**13.** Verfahren nach einem beliebigen der Ansprüche 11 und 12, **dadurch gekennzeichnet, dass** die Breite der Zone ohne Metalllegierungsschicht (19, 20) an dem Umfangsrand (21, 22) des ersten (11) und zweiten (12) Blechs, der dem Schweißvorgang unterworfen werden soll, zwischen 0,2 und 2,2 mm liegt.

14. Verfahren nach einem beliebigen der Ansprüche 11 bis 13, **dadurch gekennzeichnet, dass** die Zusammensetzung des Trägers (25, 26) mindestens eines des ersten oder zweiten Blechs (11, 12) umfasst, wobei die Gehalte in Gewichtsprozenten ausgedrückt sind:

$0,15\% \leq C \leq 0,4\%$
$0,8\% \leq Mn \leq 2,3\%$
$0,1\% \leq Si \leq 0,35\%$
$0,01\% \leq Cr \leq 1\%$
$Ti \leq 0,1\%$
$Al \leq 0,1\%$
$S \leq 0,03\%$
$P \leq 0,05\%$
$0,0005\% \leq B \leq 0,010\%$,

wobei der Rest Eisen und die der Bearbeitung inhärenten Verunreinigungen ist.

15. Verfahren nach Anspruch 13, **dadurch gekennzeichnet, dass** die Zusammensetzung des Trägers (25, 26) mindestens eines des ersten oder des zweiten Blechs (11, 12) umfasst, wobei die Gehalte in Gewichtsprozenten ausgedrückt sind:

$0,15\% \leq C \leq 0,25\%$
$0,8\% \leq Mn \leq 1,8\%$
$0,1\% \leq Si \leq 0,35\%$
$0,01\% \leq Cr \leq 0,5\%$
$Ti \leq 0,1\%$
$Al \leq 0,1\%$
$S \leq 0,05\%$
$P \leq 0,1\%$
$0,0002\% \leq B \leq 0,005\%$,

wobei der Rest Eisen und durch die Bearbeitung verursachte Verunreinigungen ist.

16. Verfahren nach einem beliebigen der Ansprüche 11 bis 15, **dadurch gekennzeichnet, dass** bei dem Schritt des Schweißens die zu schweißenden Umfangsränder (21, 22) des ersten (11) und zweiten (12) Stahlblechs in einem maximalen Abstand voneinander von 0,1 Millimetern angeordnet sind.

17. Verfahren nach einem beliebigen der Ansprüche 11 bis 16, **dadurch gekennzeichnet, dass** die lineare Schweißenergie der Laserquelle bei dem Schweißvorgang größer als 0,3 kJ/cm ist.

18. Verfahren nach Anspruch 17, **dadurch gekennzeichnet, dass** die Laserquelle, sei es ein $CO_2$-Laser, der eine lineare Schweißenergie größer als 1,4 kJ/cm liefert, sei es ein Feststofflaser, der eine lineare Schwei-ßenergie größer als 0,3 kJ/cm liefert, ist.

19. Verfahren nach einem beliebigen der Ansprüche 17 und 18, **dadurch gekennzeichnet, dass** die Schweißgeschwindigkeit zwischen 3 Meter/Minute und 8 Meter/Minute liegt und dass die Leistung des $CO_2$-Lasers größer oder gleich 7 kW und die Leistung des Feststofflasers größer oder gleich 4 kW ist.

20. Verfahren nach einem beliebigen der Ansprüche 11 bis 19, **dadurch gekennzeichnet, dass** der Schritt des Schweißens unter der Schutzgasatmosphäre von Helium und/oder Argon durchgeführt wird.

21. Verfahren nach Anspruch 20, **dadurch gekennzeichnet, dass** der Durchfluss an Helium und/oder Argon während des Schweißschrittes größer oder gleich 15 Liter pro Minute ist.

22. Verfahren nach einem beliebigen der Ansprüche 11 bis 21, **dadurch gekennzeichnet, dass** der Zuführungsdraht umfasst, wobei die Gehalte in Gewichtsprozenten ausgedrückt sind:

$$0,65\% \leq C \leq 0,75\%$$
$$1,95\% \leq Mn \leq 2,05\%$$
$$0,35\% \leq Si \leq 0,45\%$$
$$0,95\% \leq Cr \leq 1,05\%$$
$$0,15\% \leq Ti \leq 0,25\%,$$

wobei der Rest Eisen und durch die Bearbeitung verursachte Verunreinigungen ist.

23. Verfahren nach Anspruch 22, **dadurch gekennzeichnet, dass** das Verhältnis des Zuführungsmetalls relativ zum Volumen der geschmolzenen Zone (35) zwischen 12% und 26% liegt und dass die Schweißgeschwindigkeit zwischen 3 und 7 Meter pro Minute liegt.

24. Verfahren nach Anspruch 23, **dadurch gekennzeichnet, dass** das durch den Anteil des Zuführungsmetalls relativ zum Volumen der geschmolzenen Zone (35) und die Schweißgeschwindigkeit gebildete Größenpaar in dem Bereich (50), der in Figur 8 dargestellt ist, liegen.

25. Verfahren nach Anspruch 24, **dadurch gekennzeichnet, dass** die durch das Verhältnis des Zuführungsmetalls relativ zum Volumen der geschmolzenen Zone (35) und der Schweißgeschwindigkeit gebildeten Abhängigkeitsgrößen folgenden kombinierten Anforderungen genügen:

- Der Anteil des Zuführungsmetalls relativ zum Volumen der geschmolzenen Zone (35) liegt zwischen 12% und 26% und

- die Schweißgeschwindigkeit liegt zwischen 3 und 7 Meter pro Minute, und

- wenn die Geschwindigkeit größer als 3,5 Meter pro Minute ist, das durch den Anteil des Zuführungsmetalls relativ zum Volumen der geschmolzenen Zone (35) und die Schweißgeschwindigkeit gebildete Größenpaar derart sind, dass $Y \leq -3,86X+39,5$, wobei Y der Anteil des Zuführungsmetalls, ausgedrückt in Volumenprozent, und X die Schweißgeschwindigkeit, ausgedrückt in Meter pro Minuten bezeichnen.

26. Verfahren nach einem beliebigen der Ansprüche 23 bis 25, **dadurch gekennzeichnet, dass** der Anteil des Zuführungsmetalls relativ zum Volumen der geschmolzenen Zone (35) zwischen 14% und 16% liegt, der Durchfluss an Helium und/oder Argon zwischen 13 und 17 Liter pro Minute liegt, dass der Durchmesser des Laserbündels (30) am Auftreffpunkt auf das Blech zwischen 500 und 700 Mikrometer liegt, und dass das Ende (32a) des Zuführungsdrahts (32) in einem Abstand zum Auftreffpunkt des Laserbündels auf das Blechs zwischen 2 und 3 Millimetern liegt.

27. Verfahren nach einem beliebigen der Ansprüche 11 bis 26, **dadurch gekennzeichnet, dass** die Abkühlungsgeschwindigkeit der geschmolzenen Zone (35) während des Schritts des Warmformens größer oder gleich der kritischen Abkühlungsgeschwindigkeit der Martensithärtung der geschmolzenen Zone (35) ist.

28. Verwendung des Stahlteils nach einem beliebigen der Ansprüche 1 bis 10 für die Herstellung von Strukturteilen oder Sicherheitsteilen für Fahrzeuge, insbesondere Automobile.

**Claims**

1. Welded steel part, having very high mechanical strength characteristics, obtained by a heating in the austenitic range followed by a hot forming then by a cooling of at least one welded blank obtained by butt welding at least a first and a second sheet consisting at least partly of a steel substrate and of a pre-coating which consists of an intermetallic alloy layer in contact with the steel substrate, overlaid with a metal alloy layer composed of an aluminium or aluminium-based alloy, **characterized in that** the edges (36) in direct proximity to the molten zone (35) resulting from the welding operation and forming the bond between the first and the second sheets (11, 12) are devoid of the metal alloy layer (19, 20) while being provided with the intermetallic alloy layer (17, 18), **in that**, over at least part of the length of the molten zone (35), the ratio between the carbon content and the carbon content of the substrate (25, 26) of any of the first or second sheet (11, 12) that has the highest carbon content (Cmax) is between 1.27 and 1.59, and **in that** the composition of the substrate (25, 26) of at least the first or the second sheet (11, 12) comprises, the contents being expressed by weight:

0.10% ≤ C ≤ 0.5%
0.5% ≤ Mn ≤ 3%
0.1% ≤ Si ≤ 1%
0.01% ≤ Cr ≤ 1%
Ti ≤ 0.2%
Al ≤ 0.1%
S ≤ 0.05%
P ≤ 0.1%
0.0002% ≤ B ≤ 0.010%

the balance being iron and impurities inherent to production.

2. Steel part according to claim 1, **characterized in that** the ratio (Z) between the hardness of the molten zone (35) and the hardness of the substrate (25, 26) of any of the first or second sheet (11, 12) that has the highest carbon content (Cmax) is greater than 1.029 + (0.36 Cmax), Cmax being expressed as a percentage by weight.

3. Steel part according to any one of claims 1 and 2, **characterized in that** the composition of the substrate (25, 26) of at least the first or the second sheet (11, 12) comprises, the contents being expressed by weight:

0.15% ≤ C ≤ 0.4%
0.8% ≤ Mn ≤ 2.3%
0.1% ≤ Si ≤ 0.35%
0.01% ≤ Cr ≤ 1%
Ti ≤ 0.1%
Al ≤ 0.1%
S ≤ 0.03%
P ≤ 0.05%
0.0005% ≤ B ≤ 0.010%

the balance being iron and impurities inherent to production.

4. Steel part according to any one of claims 1 and 2, **characterized in that** the composition of the substrate (25, 26) of at least the first or the second sheet (11, 12) comprises, the contents being expressed by weight:

0.15% ≤ C ≤ 0.25%
0.8% ≤ Mn ≤ 1.8%
0.1% ≤ Si ≤ 0.35%
0.01% ≤ Cr ≤ 0.5%
Ti ≤ 0.1%
Al ≤ 0.1%
S ≤ 0.05%
P ≤ 0.1%
0.0002% ≤ B ≤ 0.005%

the balance being iron and impurities inherent to production.

5. Steel part according to any one of the preceding claims, **characterized in that** the carbon content of the molten zone (35) is less than or equal to 0.35% by weight.

6. Steel part according to any one of the preceding claims, **characterized in that** the metal alloy layer (17, 18) of the pre-coating (15, 16) comprises, the contents being expressed by weight, between 8 and 11% silicon, between 2 and 4% iron, the remainder of the composition being aluminium and inevitable impurities.

7. Steel part according to any one of the preceding claims, **characterized in that** the microstructure of the molten zone (35) is devoid of ferrite.

8. Steel part according to any one of the preceding claims, **characterized in that** the microstructure of the molten zone (35) is martensitic.

9. Steel part according to any one of the preceding claims, **characterized in that** said hot forming of the welded blank is carried out by a hot stamping operation.

10. Steel part according to any one of the preceding claims, **characterized in that** the respective cut faces (23, 24) of the peripheral edges (21, 22) of the first (11) and second (12) sheets intended to undergo the welding operation are devoid of aluminium or aluminium alloy.

11. Method of fabricating a welded steel part according to any one of claims 1 to 10, **characterized in that** it comprises the successive steps according to which:

- at least a first (11) and a second (12) steel sheets are provided, consisting of a steel substrate (25, 26) and a pre-coating (15, 16) which consists of an intermetallic alloy layer (17, 18) in contact with the steel substrate, overlaid with a metal alloy layer (19, 20) which is composed of aluminium alloy or aluminium-based alloy, and for which at least one face (13a, 13b; 14a, 14b) of a portion of a peripheral edge (21, 22) of each of the first (11) and second (12) steel sheets intended to undergo the welding operation is devoid of said metal alloy layer (19, 20) while leaving in place the intermetallic alloy layer (17, 18), and for which the respective cut faces (23, 24) of the peripheral edges (21, 22) of the first (11) and second (12) sheets intended to undergo the welding operation are devoid of aluminium or aluminium alloy, the presence of which may result from an earlier operation of cutting each of the first (11) and second (12) sheets, then
- the first (11) and the second (12) steel sheets, at the respective peripheral edges (21, 22) of these first (11) and second (12) steel sheets that are devoid of the metal alloy layer (19, 20), are butt-welded under a protective gas by means of a laser source (30) and by using a material filler wire (32) over at least part of the length of the welded zone, the material filler wire (32) having a carbon content greater than the substrate (25, 26) of at least one of the two sheets (11, 12), the filler wire comprising, the contents being expressed by weight:

$0.6\% \leq C \leq 1.5\%$
$1\% \leq Mn \leq 4\%$
$0.1\% \leq Si \leq 0.6\%$
$Cr \leq 2\%$
$Ti \leq 0.2\%$

the balance being iron and impurities inherent to production,
the protective gas being obtained by use of helium and/or argon,
- a welded blank (37) is obtained, in which the carbon content of the molten zone (35) resulting from the welding operation and forming the bond between the first (11) and second (12) sheets is between 1.27 and 1.59 times the carbon content of the substrate (25, 26) of the sheet (11, 12) that has the highest carbon content, then
- said welded blank (37) is heated so as to confer a completely austenitic structure in the molten zone (35), then
- said welded blank is hot-formed and heated so as to obtain a steel part, then
- said steel part is cooled at a controlled rate so as to obtain the intended mechanical strength characteristics, and **in that** the composition of the substrate (25, 26) of at least the first or the second sheet (11, 12) comprises, the contents being expressed by weight:

$0.10\% \leq C \leq 0.5\%$
$0.5\% \leq Mn \leq 3\%$
$0.1\% \leq Si \leq 1\%$
$0.01\% \leq Cr \leq 1\%$
$Ti \leq 0.2\%$
$Al \leq 0.1\%$
$S \leq 0.05\%$
$P \leq 0.1\%$
$0.0002\% \leq B \leq 0.010\%$

the balance being iron and impurities inherent to production.

12. Method according to claim 11, **characterized in that** the opposite faces (13a, 13b, 14a, 14b) of the respective peripheral edges (21, 22) of each of the first (11) and second steel sheets (11, 12) are devoid of metal alloy layer (19, 20), while leaving in place the intermetallic alloy layer (17, 18).

**13.** Method according to any one of claims 11 and 12, **characterized in that** the width of the zone devoid of metal alloy layer (19, 20) at the peripheral edge (21, 22) of the first (11) and second (12) sheets intended to undergo the welding operation is between 0.2 and 2.2 millimetres.

**14.** Method according to any one of claims 11 to 13, **characterized in that** the composition of the substrate (25, 26) of at least the first or the second sheet (11, 12) comprises, the contents being expressed by weight:

$0.15\% \leq C \leq 0.4\%$
$0.8\% \leq Mn \leq 2.3\%$
$0.1\% \leq Si \leq 0.35\%$
$0.01\% \leq Cr \leq 1\%$
$Ti \leq 0.1\%$
$Al \leq 0.1\%$
$S \leq 0.03\%$
$P \leq 0.05\%$
$0.0005\% \leq B \leq 0.010\%$

the balance being iron and impurities inherent to production.

**15.** Method according to claim 13, **characterized in that** the composition of the substrate (25, 26) of at least the first or the second sheet (11, 12) comprises, the contents being expressed by weight:

$0.15\% \leq C \leq 0.25\%$
$0.8\% \leq Mn \leq 1.8\%$
$0.1\% \leq Si \leq 0.35\%$
$0.01\% \leq Cr \leq 0.5\%$
$Ti \leq 0.1\%$
$Al \leq 0.1\%$
$S \leq 0.05\%$
$P \leq 0.1\%$
$0.0002\% \leq B \leq 0.005\%$

the balance being iron and impurities inherent to production.

**16.** Method according to any one of claims 11 to 15, **characterized in that**, during the welding step, the peripheral edges (21, 22) to be welded of the first (11) and second (12) steel sheets are arranged at a maximum distance of 0.1 millimetre from one another.

**17.** Method according to any one of claims 11 to 16, **characterized in that** the linear welding energy of said laser source during the welding operation is greater than 0.3 kJ/cm.

**18.** Method according to claim 17, **characterized in that** the laser source is either of the $CO_2$ gas laser type, which confers a linear welding energy greater than 1.4 kJ/cm, or of the solid-state laser type, which confers a linear welding energy greater than 0.3 kJ/cm.

**19.** Method according to any one of claims 17 and 18, **characterized in that** the welding speed is between 3 metres/minute and 8 metres/minute, and **in that** the power of the $CO_2$ gas laser is greater than or equal to 7 kW and the power of the solid-state laser is greater than or equal to 4 kW.

**20.** Method according to any one of claims 11 to 19, **characterized in that** the welding step is carried out under a helium and/or argon protective gas.

**21.** Method according to any one of claims 20, **characterized in that** the flow rate of helium and/or of argon during the welding step is greater than or equal to 15 litres per minute.

**22.** Method according to claim 21, **characterized in that** the filler wire comprises, the contents being expressed by weight:

$0.65\% \leq C \leq 0.75\%$

$1.95\% \leq Mn \leq 2.05\%$
$0.35\% \leq Si \leq 0.45\%$
$0.95\% \leq Cr \leq 1.05\%$
$0.15\% \leq Ti \leq 0.25\%$

the balance being iron and impurities inherent to production.

23. Method according to claim 22, **characterized in that** the proportion of filler metal relative to the volume of the molten zone (35) is between 12% and 26%, and **in that** the welding speed is between 3 and 7 metres per minute.

24. Method according to claim 23, **characterized in that** the pair consisting of said proportion of filler metal relative to the volume of the molten zone (35) and the welding speed are within the range (50) illustrated in Fig. 8.

25. Method according to claim 24, **characterized in that** the pair consisting of the said proportion of filler metal relative to the volume of the molten zone (35) and the welding speed meets the following combined requirements:

- the proportion of filler metal relative to the volume of the molten zone (35) is between 12% and 26%, and
- the welding speed is between 3 and 7 metres per minute, and
- when the welding speed is greater than 3.5 metres per minute, the pair consisting of the proportion of filler metal relative to the volume of the molten zone (35) and the welding speed is such that $Y \leq -3.86X+39.5$, it being understood that Y denotes the proportion of filler metal expressed as a percentage by volume and that X denotes the welding speed expressed in metres per minute.

26. Method according to any one of claims 23 to 25, **characterized in that** the proportion of filler metal relative to the volume of the molten zone (35) is between 14 and 16%, the flow rate of helium and/or of argon is between 13 and 17 litres per minute, **in that** the diameter of the laser beam (30) at the point of impact on the sheet is between 500 and 700 micrometres, and **in that** the end (32a) of the filler wire (32) is located at a distance of between 2 and 3 millimetres from the point of impact of the laser beam on the sheet.

27. Method according to any one of claims 11 to 26, **characterized in that** the cooling rate of the molten zone (35) during the hot forming step is greater than or equal to the critical martensitic quenching rate of said molten zone (35).

28. Use of the steel part according to any one of claims 1 to 10 for manufacturing structural parts or safety parts for a vehicle, in particular for an automobile vehicle.

FIG. 1

FIG. 2

FIG. 3

FIG. 4

FIG. 5

FIG. 6

FIG. 7

FIG. 8

FIG. 9

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 971044 A
- EP 2007545 A
- EP 1878531 A